# EUROPEAN PATENT APPLICATION

(11) **EP 4 589 532 A1**
(43) Date of publication of application: **23.07.2025**
(21) Application number: 23864522.0
(22) Date of filing: 10.08.2023
(51) Int. Cl.: G06T 7/73

(54) **LASER POSITIONING METHOD BASED ON IMAGE INFORMATON, AND ROBOT**

(30) Priority: 15.09.2022 CN 202211119924
(71) Applicant: Amicro Semiconductor Co., Ltd., Hengqin New District, Zhuhai City Guangdong 519000 (CN)
(72) Inventor: WANG, Yuelin, Zhuhai, Guangdong 519000 (CN); LAI, Qinwei, Zhuhai, Guangdong 519000 (CN)
(74) Representative: Murgitroyd & Company
(86) International application number: PCT/CN2023/112380
(87) International publication number: WO 2024/055788

(57) **Abstract**

A laser positioning method based on image information, and a robot. The laser positioning method is executed by a robot equipped with a structured-light module, the structured-light module including a line laser transmitter and a camera without any infrared filter such that imaging information of infrared light and imaging information of visible light are retained in an image acquired by the camera. The laser positioning method includes: controlling, by the robot, the camera to capture one or more frames of image of reflected light of line laser light emitted from the line laser transmitter that is reflected back from a surface of an object to be detected, and detecting whether the one or more frames of image captured by the camera are bright or dark; when the robot detects that a current frame of image captured by the camera is a frame of bright image, the robot executes an inter-frame tracking algorithm to search for positions of line laser light from the current frame of image; when the robot detects that the current frame of image captured by the camera is a frame of dark image, the robot executes a brightness centroid algorithm to extract the positions of line laser light from the current frame of image.

## Description

### TECHNICAL FIELD

The present application relates to the technical field of data processing about laser light, and in particular to a laser positioning method based on image information, and a robot.

### BACKGROUND

A structured-light module refers to any laser module that includes a line laser transmitter and a camera module. In the structured-light module, the line laser transmitter is used to emit line laser light outward. The line laser light emitted from the line laser transmitter may be located in front of the robot. The camera module can capture environmental images, and can also receive the reflected light resulting from the line laser light emitted onto the object. The line laser light emitted from the line laser transmitter is located within the field of view of the camera module. The line laser light can help detect the contour, height and/or width and other information of the object in the direction of travel of the robot, which are collectively referred to as the position information of the laser light. The camera used to capture the line laser light is generally provided with an infrared band-pass filter or an infrared high-pass filter. The reason is that after the line laser transmitter emits infrared light to the surface of the object, if the camera module is required to accurately detect the position of the line laser light in the imaging plane, the camera itself needs to be sensitive not only to the infrared light band of the line laser light reflected back from the surface of the object, but also to light in bands such as visible light.

The camera module employs the aforementioned infrared band-pass filter or infrared high-pass filter to filter the reflected light of the laser light emitted from the line laser transmitter on the surface of an obstacle, specifically, it transmits part of the laser light in the infrared band, and absorbs or reflects the ambient light in other bands, so as to separate the infrared light in the reflected light from other interfering ambient light. However, while filtering out lights in the non-infrared light bands, a large amount of environmental information is also lost. The infrared band-pass filter or infrared high-pass filter used in conjunction with the structured-light module is relatively expensive, and is prone to introduce interference when the ambient light intensity is high, resulting in more interference points.

### SUMMARY

In order to solve the above technical problems, the present application discloses a laser positioning method based on image information and a robot under the condition that the camera is not equipped with an infrared filter, so as to receive the infrared light emitted from the linear laser transmitter and reflected back from the surface of the obstacle, so as to enable the robot to track the reflected light of the laser light from the surface of the obstacle. The specific technical solutions are as follows:

A laser positioning method based on image information, in which the laser positioning method is executed by a robot equipped with a structured-light module, and the structured-light module includes a line laser transmitter and a camera without an infrared filter, so that an image captured by the camera retains imaging information of infrared light and imaging information of visible light; the laser positioning method includes: controlling, by the robot, the camera to capture one or more frames of image of reflected light of line laser light emitted from the line laser transmitter that is reflected back from a surface of an object to be detected, and detecting whether the one or more frames of image captured by the camera are of bright type or dark type; when the robot detects that a current frame of image captured by the camera is a frame of bright image, the robot executes an inter-frame tracking algorithm to search for positions of line laser light from the current frame of image, and then sets coordinates of the positions of line laser light as positioning coordinates of the line laser light emitted from the line laser transmitter in the current frame of image; when the robot detects that the current frame of image captured by the camera is a frame of dark image, the robot executes the brightness centroid algorithm to extract the positions of line laser light from the current frame of image, and then sets the coordinates of the positions of line laser light as the positioning coordinates of the line laser light emitted from the line laser transmitter in the current frame of image.

Furthermore, the executing, by the robot, the inter-frame tracking algorithm to search for the positions of line laser light from the current frame of image includes: Step 1, traversing, by the robot, pixels of the current frame of image row by row, to acquire an initial pixel position in a corresponding row of pixels of the current frame of image, and to exclude pixels where the positions of line laser light do not exist from the current frame of image according to pixels in the corresponding row that meet preset brightness distribution characteristics, the positions of line laser light are used to indicate reflection positions of the line laser light on the surface of the object to be detected; Step 2, except for the row comprising the pixels where the positions of line laser light do not exist, setting, by the robot, the initial pixel position in a current row of the current frame of image as a search center, to search pixels within a search radius upward along the current row from the search center, and to search pixels within a search radius downward along the current row from the search center; then, according to differences between brightness values of the pixels searched upward and brightness values of the pixels searched downward under search states corresponding to the two search centers determined successively, and an inter-frame matching relationship formed from same-type numerical values of the pixels in the same current row of the current frame of image relative to a reference frame of image, selecting a new convex hull center pixel in the current row to update a convex hull center pixel determined in the current row of the current frame of image last time; the reference frame of image is configured as a frame of bright image, where the positions of line laser light exist, that the robot has found most recently before the current frame of image is acquired; whenever the search center in the current row is updated once, the convex hull center pixel set in the current row is updated once; Step 3, according to a numerical relationship between a brightness value in an effective coverage area corresponding to the positioning coordinates of the line laser light emitted from the line laser transmitter in a previous frame of dark image and a brightness value of the convex hull center pixel in the current frame of image, eliminating interference pixels from the selected convex hull center pixels; after the robot traverses the convex hull center pixels in all rows of pixels in the current frame of image to eliminate all interference pixels, the coordinates of remaining ones of the convex hull center pixels are set as the positioning coordinates of the line laser light emitted from the line laser transmitter in the current frame of image, so that robot searches for the position of line laser light determined in each row in the current frame of image to form one or more laser light segments by connection from the line laser light emitted from the line laser transmitter on the surface of the object to be detected, and determining that the robot has searched for the positions of line laser light from the current frame of image by executing the inter-frame tracking algorithm; the position of line laser light determined in a row is a position of the convex hull center pixel last updated in the row after the robot traverses all the pixels in the row, and the coordinates of one of the positions of line laser light are represented by the corresponding positioning coordinates.

Furthermore, in Step 2, every time the convex hull center pixel is selected for the search center, updating an adjacent pixel, which has been searched upward or downward along the current row starting from the search center, as the search center, and repeating Step 2 to acquire the new convex hull center pixel and update the new convex hull center pixel as the convex hull center pixel; each search center is within a coverage area of a search radius relative to the initial pixel position, the search radius is set to a first preset pixel distance; the selected convex hull center pixel is a last updated convex hull center pixel in each row of convex hull center pixels in the current frame of image; the selected convex hull center pixel is closest to an origin of a coordinate system of the current frame of image in each row of convex hull center pixels in the current frame of image; the robot sets a group of pixels that meet convex hull characteristics in the current row of the current frame of image to a pixel group composed of pixels whose brightness values decrease respectively in upward and downward directions from a convex hull center along the current row, and the convex hull center pixel, to form a convex hull, the convex hull center is a position where a pixel with a largest brightness value in the pixel group locates, and the convex hull center pixel is set as the pixel at the convex hull center; in the group of the pixels that meet the convex hull characteristics, starting from the convex hull center in the upward direction along a same row, the brightness values of the pixels decrease along the current row, and a first gradient value is generated between the brightness values of two adjacent pixels, and starting from the convex hull center in the downward direction along the same row, the brightness values of the pixels decrease along the current row, and a second gradient value is generated between the brightness values of two adjacent pixels, so that the convex hull center is the search center.

Furthermore, in Step 2, according to the differences between brightness values of the pixels searched upward and brightness values of the pixels searched downward under the search states corresponding to the two search centers determined successively, and the inter-frame matching relationship formed from same-type numerical values of the pixels in the same current row of the current frame of image relative to the reference frame of image, selecting the convex hull center pixel, includes: in the current row of the current frame of image, controlling a brightness value of the search center to be compared with the brightness value of the convex hull center pixel located in the same row searched last time; the convex hull center pixel located in the same row searched last time is the selected convex hull center pixel in the same row of the current frame of image for the search center determined last time, the search center determined last time is a pixel adjacent to the currently determined search center downward or upward in the current row of the current frame of image, and a row order of the pixels in the same row of the current frame of image is equal to a row order of the current row of the current frame of image; if the brightness value of the search center currently determined is greater than the brightness value of the convex hull center pixel located in the same row searched last time, then in the current row of the current frame of image, searching for pixels upward from the search center, and counting the pixels whose brightness values decrease according to the first gradient value until an upward counting stop condition is met, then marking a number of the pixels whose brightness values decrease according to the first gradient value as an upward gradient descent number, and stopping searching for pixels upward until a next update of the search center; and searching for pixels downward from the search center, and counting the pixels whose brightness values decrease according to the second gradient value until a downward counting stop condition is met, then marking a number of the pixels whose brightness values decrease according to the second gradient value as a downward gradient descent number, and stopping searching for pixels downward until the next update of the search center; when the robot determines that the upward gradient descent number counted in the current row of the current frame of image is greater than or equal to the upward gradient descent number required to be counted for the last search for the convex hull center pixel located in the same row, and/or determines that the downward gradient descent number counted in the current row of the current frame of image is greater than or equal to the downward gradient descent number required to be counted for the last search for the center pixel of the convex hull located in the same row, among the pixels traversed by the robot in the current row of the current frame of image, if the robot detects that the first gradient value and the second gradient value are not equal to a first preset gradient parameter, and an absolute value of a difference between the first gradient value and the second gradient value is less than a second preset gradient parameter, and an absolute value of a difference between a brightness value of a pixel with a smallest brightness value searched upward along the current row and a brightness value of a pixel at the currently determined search center is greater than an absolute value of a difference in brightness values of same type formed by searching upward among the pixels in the same row of the reference frame of image, and an absolute value of a difference between a brightness value of a pixel with a smallest brightness value searched downward along the current row and a brightness value of a pixel at the currently determined search center is greater than an absolute value of a difference in brightness values of same type formed by searching downward among the pixels in the same row of the reference frame of image, then the robot marks the currently determined search center as the convex hull center pixel; the first preset gradient parameter is less than the second preset gradient parameter.

Furthermore, the absolute value of the difference in brightness values of same type formed by searching upward among the pixels in the same row of the reference frame of image is an absolute value of a difference between a brightness value of a pixel with a smallest brightness value searched upward in a row with the same row order as the current row in the reference frame of image from the search center finally determined in the row with the same row order as the current row, and a brightness value of the pixel at the search center finally determined in the same row, a distance between the pixel with the smallest brightness value searched upward and the search center finally determined in the same row is less than or equal to the search radius; the absolute value of the difference in brightness values of same type formed by searching downward among the pixels in the same row of the reference frame of image is an absolute value of a difference between a brightness value of a pixel with a smallest brightness value searched downward along a row with the same row order as the current row from the search center finally determined in the row with the same row order as the current row, and the brightness value of the pixel at the search center finally determined on the same row, a distance between the pixel with the smallest brightness value searched downward and the search center finally determined in the same row is less than or equal to the search radius.

Furthermore, for the currently determined search center, Step 2 further includes: if a brightness value of a pixel at the search center is greater than the brightness value of the convex hull center pixel located in the same row that was searched last time, then in the current row of the current frame of image, searching for pixels upward from the search center and searching for pixels downward from the search center; if the robot detects that the brightness values of the pixels are not decreasing according to the first gradient value during the upward search from the search center, increasing a preset upward gradient abnormality count number by one, and then determining whether all the pixels covered within the search radius along the current row of the current frame of image have been searched upward; if so, the robot stops searching for pixels along the current row of the current frame of image upward and determines that the upward counting stop condition is met; otherwise, when an upward gradient abnormality frequency is greater than a first preset error number, the robot stops searching for pixels along the current row of the current frame of image upward and determines that the upward counting stop condition is met; and, if the robot detects that the brightness values of the pixels are not decreasing according to the second gradient value during the downward search from the search center, counting a preset downward gradient abnormality count number once, and then determining whether all the pixels covered within the search radius along the current row of the current frame of image have been searched downward; if so, the robot stops searching for pixels along the current row of the current frame of image downward and determines that the downward counting stop condition is met; otherwise, when an upward gradient abnormality frequency is greater than a second preset error number, the robot stops searching for pixels along the current row of the current frame of image downward and determines that the downward counting stop condition is met; or during the upward search from the search center, counting, by the robot, the pixels whose brightness value is 255 and whose positions are adjacent to each other upward along the current row of the current frame of image, and marking a number of the pixels whose brightness value is 255 and whose positions are adjacent to each other as an upward overexposure number; when the robot detects that the upward overexposure number is greater than a third preset error number, and/or the pixels covered within the search radius are counted upward along the current row of the current frame of image, stopping, by the robot, searching for pixels upward along the current row of the current frame of image and determining that the upward counting stop condition is met; and during the downward search from the search center, counting, by the robot, the pixels whose brightness value is 255 and whose positions are adjacent to each other downward along the current row of the current frame of image, and marking a number of pixels whose brightness value is 255 and whose positions are adjacent to each other as a downward overexposure number; when the robot detects that the downward overexposure number is greater than a fourth preset error number, and/or the pixels covered within the search radius are counted downward along the current row of the current frame of image, stopping, by the robot, searching for pixels downward along the current row of the current frame of image and determining that the downward counting stop condition is met.

Furthermore, in Step 3, according to the numerical relationship between the brightness value in the effective coverage area corresponding to the positioning coordinates of the line laser light emitted from the line laser transmitter in the previous frame of dark image and the brightness value of the convex hull center pixel in the current frame of image, eliminating interference pixels from the selected convex hull center pixels, includes: after the robot traverses all the rows of the current frame of image and acquires a latest convex hull center pixel in each row, and saves the positioning coordinates of the line laser light emitted from the line laser transmitter in the previous dark image, for each convex hull center pixel in the current frame of image, within a circular area with the positioning coordinates of the line laser light emitted from the line laser transmitter in the previous dark image as a center and a detection pixel distance as a radius, if the robot determines that there is at least one pixel in the circular area whose brightness value is greater than the brightness value of the convex hull center pixel with same coordinates as the center in the current frame of image by a preset ambient light brightness threshold, determining, by the robot, that the convex hull center pixel with the same coordinates as the center in the current frame of image is the interference pixel, at which the robot cannot find the position of line laser light, and eliminating the interference point from the current frame of image.

Furthermore, in Step 1, excluding the pixels where the positions of line laser light do not exist from the current frame of image according to the pixels in the corresponding row that meet the preset brightness distribution characteristics, includes: if a brightness value of the initial pixel position in the current row of the current frame of image is greater than a brightness value of the pixel at the position of line laser light found in a previous round and located in the same row by a first preset brightness threshold, or a brightness value of the initial pixel position in the current row of the current frame of image is greater than a brightness value of the pixel at the position of line laser light found in the previous round and located in the same row by a second preset brightness threshold, then starting from a position which is at a reference pixel distance upward from the initial pixel position in the current row of the current frame of image along the current row of the current frame of image, searching for pixels downward along the current row of the current frame of image; if a brightness value of a pixel currently searched is detected to be greater than the brightness value of the pixel at the position of line laser light found in the previous round and located in the same row by the first preset brightness threshold, or when the brightness value of a pixel currently searched is detected to be equal to 255, counting an error position count number once, and determining that the pixel currently searched meets the preset brightness distribution characteristics; when the robot detects that the error position count number is greater than a reference pixel count threshold, determining that the positions of line laser light are not in the current row of the current frame of image, then setting the pixels in the current row of the current frame of image as the pixels where the positions of line laser light do not exist, and then excluding the pixels in the current row of the current frame of image from a pixel search range of Step 2, and determining that a light intensity of environment where the robot is located is greater than a first preset light intensity threshold; the reference pixel distance is represented by a number of pixels, so that the reference pixel count threshold is equal to the reference pixel distance; the position of line laser light located in the same row found in the previous round is the position of the convex hull center pixel finally determined in the same row of pixels belonging to the reference frame of image.

Furthermore, in Step 1, excluding the pixels where the positions of line laser light do not exist from the current frame of image according to the pixels in the corresponding row that meet the preset brightness distribution characteristics, includes: taking the initial pixel position in the current row of the current frame of image as a center of a ring, marking, in the current row of the current frame of image, the pixels covered by a ring area whose inner radius is a first positioning radius and whose outer radius is a second positioning radius and located below the center of the ring as first pixels to be tested, and calculating an average brightness value of the first pixels to be tested, and if the average brightness value of the first pixels to be tested is greater than the brightness value of the pixel at the position of line laser light located in the same row found in the previous round, determining that the first pixels to be tested meet the preset brightness distribution characteristics, and determining that the positions of line laser light are not in the current row of the current frame of image, then setting the pixels in the current row of the current frame of image as the pixels where the position of line laser light do not exist, and then excluding the pixels in the current row of the current frame of image from a pixel search range of Step 2, and determining that a light intensity of environment where the robot is located is greater than a first preset light intensity threshold; the first positioning radius is smaller than the second positioning radius, and the position of line laser light located in the same row found in the previous round is the position of the convex hull center pixel finally determined in the same row of pixels belonging to the reference frame of image; or taking the initial pixel position in the current row of the current frame of image as a center of a ring, marking, in the current row of the current frame of image, the pixels covered by a ring area whose inner radius is the first positioning radius and whose outer radius is the second positioning radius and located above the center of the ring as second pixels to be tested, and calculating an average brightness value of the second pixels to be tested, and if the average brightness value of the second pixels to be tested is greater than the brightness value of the pixel at the position of line laser light located in the same row found in the previous round, determining that the second pixels to be tested meet the preset brightness distribution characteristics, and determining that the positions of line laser light are not in the current row of the current frame of image, then setting the pixels in the current row of the current frame of image as the pixels where the position of line laser light do not exist, and then excluding the pixels in the current row of the current frame of image from a pixel search range of Step 2, and determining that a light intensity of environment where the robot is located is greater than a first preset light intensity threshold; the first positioning radius is smaller than the second positioning radius, and the position of line laser light located in the same row found in the previous round is the position of the convex hull center pixel finally determined in the same row of pixels belonging to the reference frame of image.

Furthermore, the initial pixel positions of the traversed rows are positions of original pixels in the image captured by the camera after the line laser light emitted from the line laser transmitter is reflected back to a field of view of the camera from a travel plane of the robot when there is no obstacle in front of the robot; each of the original pixels corresponds to a reflection position on the travel plane of the robot, and is used to represent a starting point for searching the position of line laser light in each row of the same frame of image; the reference frame of image is configured as a frame of bright image where the position of line laser light is found by the robot most recently before the current frame of image, the position of line laser light found by the robot most recently is derived from the convex hull center pixel set in the corresponding row of the reference frame of image.

Furthermore, in Step 1, if the initial pixel position cannot be acquired in the current row of the current frame of image, the position of line laser light located in the same row found in the previous round is updated as the initial pixel position, and a second preset pixel distance is updated as the search radius, and Step 2 is repeated to search for the convex hull center pixel in the corresponding row; the position of line laser light located in the same row found in the previous round is the position of the convex hull center pixel finally determined in the same row of pixels belonging to the reference frame of image or the initial pixel position in the same row of pixels of the first frame of bright image; if the robot cannot find the convex hull center pixel in the same row while repeatedly executing Step 2, it is determined that the robot cannot find the position of line laser light in the same row.

Furthermore, the executing, by the robot, the brightness centroid algorithm to extract the positions of line laser light from the current frame of image includes: traversing, by the robot, the pixels of the current frame of image row by row; searching, by the robot, each pixel in a current row in sequence, to select appropriate pixels from the current row of the current frame of image according to a numerical relationship between a brightness value of a currently searched pixel in the current row of the current frame of image and a brightness value of a pixel at a corresponding position of a previous frame of bright image and according to the brightness value of the pixel at the corresponding position of the previous frame of bright image; then, in the current row of the current frame of image, connecting at least two of the appropriate pixels that are adj acent in position to form a positioning line segment; after all the appropriate pixels that are adjacent in position are connected, selecting one of the positioning line segments with a largest length; if the length of the selected positioning line segment with the largest length is greater than a preset continuous length threshold, selecting a center of the selected positioning line segment with the largest length as the position of line laser light.

Furthermore, selecting the appropriate pixels from the current row of the current frame of image according to the numerical relationship between the brightness value of the currently searched pixel in the current row of the current frame of image and the brightness value of a pixel at the corresponding position of the previous frame of bright image and according to the brightness value of the pixel at the corresponding position of the previous frame of bright image includes: subtracting the brightness value of the pixel currently searched in the current frame of image from the brightness value of the pixel at a same row and line position in the previous frame of bright image to acquire a relative difference of frame of dark image; when it is detected that an opposite number of the relative difference of frame of dark image is greater than a preset brightness difference threshold, and a brightness value of a pixel at the same row and line position in the previous frame of bright image is greater than a reference frame of bright image brightness threshold, setting the pixel currently searched in the current frame of image as the appropriate pixel.

Furthermore, an image sequence, captured by the camera and formed by the reflected light of the line laser light emitted from the line laser transmitter that is reflected back from the surface of the object to be detected is configured to generate the frames of image comprised of frames of bright image and frames of dark image alternately in sequence, so that: when the current frame of image captured by the camera is a frame of bright image, a next frame of image captured by the camera is a frame of dark image; within a time interval between the camera capturing the current frame of bright image and the camera capturing a next frame of bright image, the camera captures the current frame of dark image; after the camera captures the next frame of bright image, the camera captures a next frame of dark image; during the execution of the laser positioning method, a first frame of image of the image sequence is a frame of bright image.

Furthermore, the laser positioning method further includes: when the robot detects that a light intensity of environment where the robot is located is greater than a first preset light intensity threshold, reducing, by the robot, a gain of the camera so that each frame of image, captured by the camera, of the reflected light of the line laser light that is reflected form the surface of the object to be detected is not overexposed; when the robot detects that the light intensity of environment where the robot is located is greater than the first preset light intensity threshold, reducing, by the robot, exposure time of the camera so that each frame of image, captured by the camera, of the reflected light of the line laser light that is reflected from the surface of the object to be detected is not overexposed; when the robot detects that the light intensity of environment where the robot is located is less than a second preset light intensity threshold, increasing, by the robot, the gain of the camera so that each frame of image, captured by the camera, of the reflected light of the line laser light that is reflected from the surface of the object to be detected is not underexposed; when the robot detects that the light intensity of environment where the robot is located is less than the second preset light intensity threshold, increasing, by the robot, the exposure time of the camera so that each frame of image, captured by the camera, of the reflected light of the line laser light that is reflected from the surface of the object to be detected is not underexposed.

Furthermore, when the robot detects that a current exposure value of the camera is greater than a first preset exposure threshold, a power level of the line laser transmitter for emitting the line laser light is increased so that an intensity of the line laser light emitted from the line laser transmitter is configured to be equal to a product of a smoothing coefficient and the current exposure value; when the robot detects that the current exposure value of the camera is less than a second preset exposure threshold, the power level of the line laser transmitter for emitting the line laser light is lowered so that the intensity of the line laser light emitted from the line laser transmitter is configured to be equal to the product of the smoothing coefficient and the current exposure value; the first preset exposure threshold is greater than the second preset exposure threshold, and the current exposure value of the camera is used to reflect exposure amount of the camera in an environment with current light brightness; the smoothing coefficient is used to smooth a step size of an exposure value adjustment, so that the robot can search for the position of line laser light from the current frame of image.

A robot, in which a body of the robot is equipped with a structured-light module including a line laser transmitter and a camera without an infrared filter, so that an image captured by the camera retains imaging information of infrared light and imaging information of visible light; a controller is provided inside the robot, the controller is electrically connected to the structured-light module, and the controller is configured to execute the laser positioning method to acquire the positioning coordinates of the line laser light emitted from the line laser transmitter in the current frame of image; the line laser light emitted from the line laser transmitter is within a field of view of the camera.

Furthermore, a horizontal viewing angle of the camera is configured to receive the reflected light of the line laser light that is reflected from a space within a width of the robot in front of the robot; and/or an installation height of the structured-light module on the body of the robot is configured to be in proportion to a height of an obstacle to be detected, so that the obstacle to be detected occupies an effective field of view of the camera.

Furthermore, a coverage range of an upper viewing angle of the camera is configured to cover a bottom of a plane formed by the line laser light emitted from the line laser transmitter; a coverage range of a lower viewing angle of the camera is configured to cover the reflected light of the line laser light emitted from the line laser transmitter that is reflected from a surface of the obstacle in front of the body of the robot; and/or a heading angle formed by a deflection of the camera relative to a central axis of the robot is maintained within a preset error angle range, so that an optical axis of the camera is parallel to a travel direction of the robot, and the camera receives the reflected light of the line laser light reflected back from the space within the width of the robot in front of the robot; and/or a roll angle of the camera generated by rotating along an optical axis thereof is maintained within a preset error angle range, so that the camera receives the reflected light of the line laser light that is reflected back from the space within the width of the robot in front of the robot, the camera is rotatably installed on the body of the robot.

Furthermore, the larger an installation distance between the camera and the line laser module, the larger a coordinate offset of a pixel used to represent a reflection position of the line laser light on a surface of the obstacle relative to a center of the camera in the image captured by the camera.

Furthermore, an emission angle of the line laser transmitter and a receiving angle of the camera are configured so that the line laser transmitter emits the line laser light to a preset detection position in front of the body, and the line laser light is reflected back to the camera from the preset detection position, a length of a laser light segment formed by the line laser light at the preset detection position is greater than a width of the body of the robot; whenever the robot travels a preset distance in a direction from a current position to the preset detection position, a horizontal distance between the preset detection position and the robot becomes smaller, and a coordinate offset of the pixel in the image captured by the camera that represents a same reflection position of the line laser light in the preset detection position relative to a center of the camera increases.

The technical effect of the present application is that: in the process of executing the laser positioning method to track the image of the reflected light of the line laser light, there is no need to use an infrared filter to filter the ambient light, so that all the details of the infrared and visible light bands are retained in the captured image, which makes it convenient for the robot to search, from the current frame of image, for the position information associated with the pixels formed by the line laser light in the imaging plane of the camera, including adopting appropriate algorithms (such as pixel matching algorithms and pixel search algorithms) in the frame of bright image and the frame of dark image respectively to extract the position of line laser light to achieve laser positioning, which can then be used for map navigation positioning and deep learning for identifying obstacles.

When the robot detects that the current frame of image captured by the camera is a frame of bright image, it chooses to input the current frame of image into the processing rule model corresponding to the inter-frame tracking algorithm to output a valid position of laser light, effectively filtering out various ambient light interferences in scenes where the camera is not too close to obstacles, and reducing dependence on infrared filters; specifically, in the pixels that meet the convex hull characteristics, based on the numerical relationship between the brightness value gradient generated in the upward searched pixels, the difference thereof between the search states corresponding to the two search centers determined successively, the relationship between the brightness value of the currently searched pixel and the brightness value of the convex hull center pixel determined in the same row of the same frame of image last time, and the inter-frame matching relationship formed by the same type of values in the same row of the current frame of image relative to the reference frame of image, the convex hull center pixel of the current row is selected, and each pixel within the search radius relative to the initial pixel position is traversed in the current row and the convex hull center pixel is updated. After excluding the interference pixel where the positions of line laser light do not exist, the convex hull pixel of the current row is finally determined. It can reduce the misjudgment of interference points under strong ambient light conditions, thereby searching for a more accurate convex hull center pixel by tracking the number and brightness values of pixels that meet the convex hull characteristics of the reference frame of image. After eliminating all interference points, the coordinates of the remaining convex hull center pixels are set as the positioning coordinates of the line laser light emitted from the line laser transmitter in the current frame of image, so as to more accurately realize the robot's tracking of the reflected light of the laser light from the obstacle surface. It is suitable for robot navigation walking scenes to achieve the effect of robot locating obstacles. On another hand, when the robot detects that the current frame of image captured by the camera is a frame of dark image, it chooses to input the current frame of image into the processing rule model corresponding to the brightness centroid algorithm to output a positioning line segment with a reasonable connection length, thereby overcoming the problem of being sensitive to ambient light interference in scenarios where the camera is too close to obstacles. Correspondingly, it prevents the robot from colliding with obstacles in front that reflect laser light due to misjudgment. Therefore, the present application combines the inter-frame tracking algorithm and the brightness centroid algorithm to take advantage of each other in various ambient light intensity scenes, and realizes laser positioning in the frames of bright image and frames of dark image that are alternately generated to reflect the reflected light of the line laser light.

In addition, the present application also introduces a dynamic adjustment method for the exposure value of the camera, which adjusts the gain and exposure time of the camera according to the current environmental conditions, so that the image seen in the camera does not appear overexposed or underexposed; on this basis, according to the adjusted gain and exposure time of the camera, the power level of the line laser transmitter for emitting the line laser is adjusted to achieve the use of a stronger power level for line laser light transmitting in a high-brightness environment, so that the line laser light can be seen on the obstacle when the ambient light is brighter, and the image will not be overexposed (for example, under strong outdoor ambient light, after the line laser light is reflected back to the camera by a white obstacle, the gain or exposure time of the camera is reduced), avoiding overexposure of the image captured by the camera due to the overbright environment, thereby finding a more accurate position of line laser light; in a low-brightness environment, a lower power level is used for line laser emitting, so that the image of obstacle is not so strongly overexposed when the ambient light is darker, thereby not generating more reflection interference, and facilitating a more accurate position of line laser light (corresponding to the convex hull center).

### BRIEF DESCRIPTION OF THE DRAWINGS

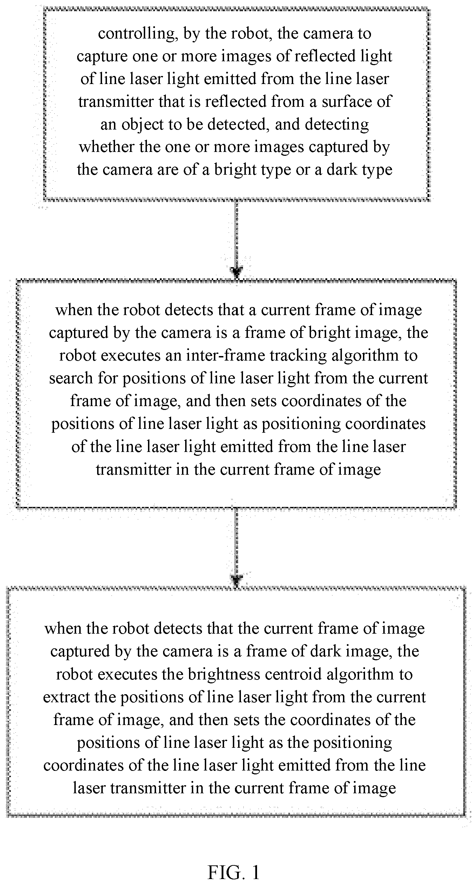

FIG. 1 is a flow chart of a laser positioning method based on image information according to an embodiment of the present application.

### DETAILED DESCRIPTION OF THE EMBODIMENTS

The technical solutions in the embodiments of the present application will be described in detail below in conjunction with the accompanying drawings in the embodiments of the present application. To further illustrate various embodiments, the present application provides the accompanying drawings. These drawings are part of the disclosure of the present application, which are mainly used to illustrate the embodiments and can be used in conjunction with the relevant descriptions in the specification to explain the operating principles of the embodiments. With reference to these contents, a person skilled in the art should be able to understand other possible implementations and advantages of the present application.

The embodiments of the present application disclose a laser positioning method based on image information, in which the positioning is performed specifically based on the location where the laser light is reflected from the surface to be detected. According to the method, it adaptively selects representative position information of laser light segment based on the change in brightness value of pixels in two related frames of images captured by a camera (corresponding to the change in ambient light intensity), thereby overcoming the interference of ambient light and improving the obstacle detection accuracy and the obstacle avoidance efficiency of the robot. The executor of the laser positioning method disclosed in the embodiments of the present application is a robot that relies on structured light navigation and positioning. The robot is equipped with a structured-light module, which includes a line laser transmitter and a camera without an infrared filter, so that the imaging information of infrared light and visible light are retained in the image captured by the camera. The line laser light emitted from the line laser transmitter is located within the field of view of the camera, and the line laser light emitted from the line laser sensor may be projected onto the surface of an obstacle. The field of view of the camera covers all or part of the outline of the obstacle. In general navigation and positioning scenarios, when the robot moves indoors or outdoors, the structured-light module arranged on the robot can be used to detect whether there is an obstacle in front of the robot along the travel direction thereof. When the robot moves towards the obstacle, the detection accuracy about the reflection position on the obstacle surface is affected by executing the laser positioning method, thereby improving the positioning and obstacle avoidance accuracy.

It should be noted that the structured-light module used in the embodiments of the present application generally refers to any sensor module that includes a line laser transmitter and a camera. In the structured-light module, the line laser transmitter is used to emit line laser light outward. The line laser light emitted from the line laser transmitter may be located in the effective detection area in front of the robot. The camera can sequentially capture multiple frames of images under various ambient light conditions. The images include infrared light imaging information and visible light imaging information. The visible light imaging information can be directly used to construct a map and mark the positions of obstacles in the map. In this embodiment, the main focus is on the image formed by receiving the reflected light of the line laser light emitted on the object to be detected, in which the reflected light is reflected back from the object. The interference of ambient light in different bands is to be addressed. The line laser light emitted from the line laser transmitter is located within the field of view of the camera and forms a laser light segment on the surface of the object to be detected or the horizontal ground. The line laser light can help detect the contour, height and/or width of the object in the travel direction of the robot. This embodiment mainly extracts the height information of the object to meet the needs of the inter-frame tracking algorithm. Compared with perception solutions based on image sensors, line laser transmitters can provide the camera with more accurate pixel height and direction information, which can reduce the complexity of perception operations and improve real-time performance.

Specifically, the working principle of the structured-light module is as follows. The line laser transmitter emits a line laser light outward. After the emitted line laser light reaches the surface of the obstacle, a part of it is reflected back to form pixels of the image through the optical imaging system in the camera. Since the distance from the surface of the object to the return point is different in different positions, the flight time of the reflected lights is different. By measuring the flight time of the reflected lights, the independent distance information and direction information of each pixel can be acquired, and then the trigonometric conversion may be used to acquire the height information and width information, and based on which the coordinate information of the pixels on the image can be marked. These kinds of information are collectively referred to as position information. While the robot is moving, the line laser transmitter in the structured-light module may be controlled to emit line laser light outward. When the line laser light encounters an obstacle on the moving path, it will be reflected back. At least the ground medium and low obstacles on the ground are in the detection range of the line laser transmitter. The camera in the structured-light module is controlled to capture environmental images in the front area. During this period, if an obstacle on the path of travel is detected by the line laser light, a laser light segment will be formed on the surface of the object, which can be captured by the camera. That is to say, the image captured by the camera includes the laser light segment formed after the line laser light emitted from the line laser transmitter encounters the object. The angle between the laser light segment formed by the line laser light on the surface of the object and the horizontal plane is not limited. For example, it can be parallel or perpendicular to the horizontal plane, or it can be at any angle to the horizontal plane, which can be determined according to application requirements. Each laser light segment contains multiple pixels, and each pixel corresponds to a point on the obstacle surface. The points on the obstacle surface represented by the pixels on the laser light segments in a large number of environmental images can form obstacle point cloud data. The coordinate system used for the obstacle point cloud data may be the coordinate system of the robot. The robot can convert the pixel coordinates on the laser light segment to the coordinate system of the robot according to the conversion relationship between the image coordinate system of the camera and the coordinate system of the robot to acquire the obstacle point cloud data. Alternatively, the coordinate system used for the obstacle point cloud data may be the world coordinate system. In this case, the robot can convert the pixel coordinates on the laser light segment to the coordinate system of the robot based on the conversion relationship between the coordinate system of the camera, the coordinate system of the robot and the world coordinate system to acquire the obstacle point cloud data. The obstacle point cloud data can include but is not limited to the point's three-dimensional coordinate information, color information, reflection intensity information, etc. After acquiring the obstacle point cloud data, the height information, length and width information of the obstacle are acquired, and the type of obstacle can be identified based on the obstacle point cloud data. In the embodiment of the present application, it is not limited to identifying the type of obstacle and the area it occupies through obstacle point cloud data. For example, obstacle point cloud data may be input into a deep learning model to identify the type of obstacle. Alternatively, the obstacle may be depicted based on the obstacle point cloud data to acquire the obstacle points and obstacle contours, and the type of obstacle may be determined based on the obstacle contours. Cluster analysis, threshold filtering, and confidence judgment may also be performed based on the obstacle points for identification.

Specifically, the implementation form of the line laser transmitter is not limited, and it can be any device/product form that can emit line laser light. For example, the line laser transmitter may be, but is not limited to, a laser tube. Similarly, the implementation form of the camera is not limited, and any visual device that can capture environmental images is applicable to the embodiments of the present application. For example, the camera may include but is not limited to a monocular camera, a binocular camera, etc. In an embodiment of the present application, the wavelength of the line laser light emitted from the line laser transmitter may be limited to the wavelength of infrared light, for example, it can be an infrared laser. In the process of implementing the laser positioning method, the camera can receive light of various wavelengths in the line laser light emitted from the line laser transmitter without installing a filter (such as an infrared filter) on the lens. Of course, in some embodiments, the installation position, installation angle of the line laser transmitter, and the installation positional relationship between the line laser transmitter and the camera module are not limited. In the embodiment of the present application, the number of line laser transmitters is not limited, for example, it can be one, or it can be two or more. Similarly, the number of cameras is not limited, for example, it can be one, or two or more.

In some embodiments, the field of view of the camera includes a vertical field of view angle and a horizontal field of view angle. In this embodiment, a camera with a suitable field of view angle can be selected according to application requirements, as long as the line laser light emitted from the line laser transmitter is within the field of view of the camera. The angle between the laser light segment formed by the line laser light on the surface of the object and the horizontal plane is not limited. For example, it can be parallel or perpendicular to the horizontal plane, or it can be at any angle to the horizontal plane, depending on application requirements.

In some embodiments, the installation height of the structured-light module composed of the line laser transmitter and the camera is determined according to the size of the obstacle to be detected. If the installation height of the structured-light module in the robot is higher, the longitudinal space covered in front of the robot will be larger, which will make the detection accuracy of smaller obstacles worse. If the installation height of the structured-light module in the robot is lower, the longitudinal space covered in front of the robot will be smaller, which will improve the detection accuracy of smaller obstacles. Preferably, the line laser transmitter is installed above the camera without an infrared filter, and the center line of the line laser transmitter intersects with the center line of the camera at one point.

Referring to FIG. 1, the laser positioning method based on image information according to the present application includes: controlling, by a robot, a camera to capture one or more images of reflected light of a line laser light emitted from a line laser transmitter that is reflected from the surface of an object to be detected, and detecting, by the robot, if the one or more images captured by the camera are of bright type or dark type, specifically distinguishing between a frame of bright image and a frame of dark image, that is, detecting, by the robot, whether each frame of image capture by the camera in sequence is a frame of bright image or a frame of dark image. In some embodiments, during the process of moving toward a predetermined target position, the robot controls the line laser transmitter to emit a line laser light, and controls the camera to capture an image of reflected light of a line laser light emitted from a line laser transmitter on the surface of an object to be detected, in which the reflected light is reflected back from the surface of the object; the structured-light module works in a certain manner, and the line laser transmitter emits the line laser light according to a preset modulation period and emission power level; the camera periodically captures images to acquire a set of image sequences including data of at least one frame of image, each frame of image includes a laser light segment formed when the line laser light reaches the surface of an object or the ground, a laser light segment includes multiple coordinate data, and the coordinate data of the laser light segments in a large number of environmental images can form point cloud data.

Specifically, the step of detecting whether the image captured by the camera is a frame of bright image or a frame of dark image includes: controlling the line laser transmitter to emit a line laser light according to a preset modulation period, when the line laser light is emitted in response to an infrared laser modulation signal, a first level (corresponding to a logic high level) is output in the first modulation sub-period in response to the infrared laser modulation signal, and after the line laser light is reflected by the object to be detected, it is captured by the camera to form a frame of bright image; outputting, in response to the infrared laser modulation signal, a second level (corresponding to a logic low level) in the first modulation sub-period so that after the line laser light is reflected from the object to be detected, it is captured by the camera to form a frame of dark image; in this case, a frame of bright image and a frame of dark image are sequentially formed on the imaging plane within one sampling period, and the robot will set an image structure (structure information of the image data) for each frame of the image acquired from the camera, and then cache it and mark the brightness and darkness attributes of the line laser light accordingly, each frame of image can be saved as the previous frame of image for tracking and matching. Under the configuration of the robot, the image sequence formed in the imaging plane of the camera from the reflected light of the line laser light emitted from the line laser transmitter on the surface of the objected to be detected, in which reflected light is reflected back from the surface of the object, is configured to be alternately generated as a frame of bright image and frame of dark image, so that when the current frame of image captured by the camera is a frame of bright image, the next frame of image captured by the camera is a frame of dark image; within the time interval between the camera capturing the current frame of bright image and the camera capturing the next frame of bright image, the camera captures the current frame of dark image, and the time interval is equal to a sampling period of the camera; after the camera captures the next frame of bright image, the camera captures the next frame of dark image. In the process of performing the laser positioning method, the first frame of image of the reflected light of the line laser light reflected from the surface of the object to be detected, is a frame of bright image, which is set as the first frame of image captured after the line laser transmitter emits the line laser light, and may alternatively set as the first frame of bright image; then the second frame of image of the reflected light of the line laser light reflected from the surface of the object to be detected is a frame of dark image, which is set as the second frame of image captured after the line laser transmitter emits the line laser light, and may alternatively set as the first frame of dark image; then, the third frame of image of the reflected light of the line laser light reflected from the surface of the object to be detected is a frame of bright image, which is set as the third frame of image captured after the line laser transmitter emits the line laser light, and may alternatively set as the second frame of bright image, and then the next frame of image captured by the camera is a frame of dark image. In this case, the robot distinguishes and marks the frames of bright image and the frames of dark image in sequence from a group of image sequences captured by the camera based on the above-mentioned alternating way according to the sampling period of the camera.

Preferably, the distinction between the frames of bright image and the frames of dark image can be achieved based on the average grayscale value of the images. Specifically, each time a frame of image is captured, the brightness values of all pixels of the frame are collected first, the sum of the brightness values of all pixels is accumulated, and then the ratio of the sum of the brightness values to the number of pixels is calculated as the average brightness value of the frame. When the robot detects that the brightness values of a preset threshold number of pixels in the frame are all greater than the average brightness value, the frame is set as a frame of bright image, which can be used to search for pixels that meet the optimal convex hull condition in positioning scenes with strong ambient light, allowing the camera exposure to be increased. When the robot detects that the brightness values of a preset threshold number of pixels in the frame of image are all less than the average brightness value, the frame is set as a frame of dark image, which can be used to search for pixels that meet the optimal convex hull condition in positioning scenes with weak ambient light, allowing the camera exposure to be reduced. Therefore, the adaptability of the laser positioning method to ambient light intensity is improved. The preset threshold number is greater than or equal to the number of all pixels in the frame.

When the robot detects that the current frame of image captured by the camera is a frame of bright image, the robot searches for the positions of line laser light from the current frame of image by executing the inter-frame tracking algorithm, and then sets the coordinates of the positions of line laser light as the positioning coordinates of the line laser light emitted from the line laser transmitter in the current frame, so as to realize the positioning of the pixels corresponding to the line laser light. The robot sequentially inputs each frame of image captured by the camera into the processing rule model corresponding to the inter-frame tracking algorithm, and outputs the positions of line laser light in the corresponding frame of bright image, so as to acquire the laser light segment formed by connecting each position of line laser light, and facilitate the positioning of the object to be detected. The images input in the processing rule model corresponding to the inter-frame tracking algorithm can be divided into the current frame of image and the previous frame of image, or the current frame of image and the next frame of image. The matching relationship between the previous frame of bright image and the current frame of bright image, and/or the matching relationship between the previous frame of dark image and the current frame of bright image can be used to track the reflection position of the line laser light. It effectively filters out various ambient light interferences, especially strong ambient light interference, in scenes where the camera is not too close to obstacles, overcomes the influence of the longitudinal jump of the pixels caused by the change in the distance between the camera and the object to be detected, tends to acquire more accurate positions of line laser light, and reduces dependence on infrared filters.

When the robot detects that the current frame of image captured by the camera is a frame of dark image, the robot extracts the positions of line laser light from the current frame of image by executing the brightness centroid algorithm, and then takes the coordinates of the positions of line laser light as the positioning coordinates of the line laser light emitted from the line laser transmitter in the current frame of image, thereby realizing the complete positioning of the pixels of the line laser light in the process of alternatingly executing the inter-frame tracking algorithm and the brightness centroid algorithm. The robot selects to input each frame of image into the processing rule model corresponding to the brightness centroid algorithm, and outputs the effective position of line laser light in the corresponding frame of dark image, and the effective position of line laser light is the position of line laser light with predictive significance determined at the moment when the frame of dark image is captured, so as to assist in forming an relatively accurate laser light segment by connecting the positions of line laser light in the corresponding frame of bright images. Since the robot only pays attention to the sensitivity of changes in ambient light intensity and ignores the distance of the robot from obstacles during the execution of the inter-frame tracking algorithm, the robot is prone to collide with obstacles during walking. Therefore, after the current frame of image captured is switched from a frame of bright image to a frame of dark image, the robot switches to executing the brightness centroid algorithm. In the scene where the camera is too close to the obstacle, it can not only notice the existence of the obstacle, but also promptly identify the reflection position of line laser light to prevent the robot from colliding with the obstacle in front. As for the misjudgment problem of the position of line laser light caused by ambient light interference, after the current frame of image captured is switched from a frame of dark image to a frame of bright image, the robot executes the inter-frame tracking algorithm to overcome the corresponding misjudgment problem. Therefore, the embodiments of the present application copes with the interference of ambient light intensity by switching between the execution of the inter-frame tracking algorithm and the brightness centroid algorithm, thereby enhancing the stability of the robot's laser positioning in various walking environments, and achieving stable laser positioning in the frames of bright images and frames of dark images that are alternately generated for the reflected light of the line laser light.

In summary, in the process of executing the laser positioning method to track the image of the reflected light of the line laser light, there is no need to use an infrared filter to filter the ambient light, so that all the details of the infrared and visible light bands are retained in the captured image, which makes it easy for the robot to search from the current frame of image for the position information associated with the pixels formed from the line laser light in the imaging plane of the camera, including adopting appropriate algorithms (such as pixel matching algorithms and pixel search algorithms) in frames of bright image and frames of dark image respectively, and complementarily extracting each position line laser light to realize laser positioning of obstacles of different distances in scenes with various ambient light intensity. The robot can overcome the interference of ambient light of different intensities in various walking environments, and can be used for map navigation positioning and deep learning for identifying obstacles.

As an embodiment, the way of the robot searching from the current frame of image for the positions of line laser light by executing the inter-frame tracking algorithm includes Steps 1 to 3.

In Step 1, the robot traverses the current frame of image row by row in the vertical direction, and acquires the initial pixel position in the current row of the current frame of image; generally, an initial pixel position can be acquired in each row of the current frame of image, and the initial pixel position is used as the search starting point for searching for pixels that meet the optimal convex hull condition in the row where it is located; it should be noted that the initial pixel position is the position of the original pixel in the image captured by the camera after the line laser light emitted from the line laser transmitter is reflected back to the field of view of the camera from the robot's travel plane (generally the ground) when there is no obstacle in front of the robot (or an obstacle within the field of view of the camera); at this time, the line laser transmitter or the camera has been calibrated; preferably, the travel plane of the robot can be represented by the surface of the object to be detected; each original pixel is a reflection position on the corresponding robot's travel plane, which is used to represent the search starting point for searching the position of line laser light in each row of the same frame of image, and each original pixel acquired in the same frame of image is preferably located on the same horizontal line of pixels, and may include adjacent pixels in the same horizontal line. The object to be detected may be an obstacle raised from the travel plane of the robot.

At the same time, the pixels where the positions of line laser light do not exist are excluded from the current frame of image according to the pixels in the corresponding row that meet the preset brightness distribution characteristics, so as to eliminate the interference of the pixels with strong ambient light interference before starting to search for the pixels that meet the convex hull characteristics in the current frame of image. The position of line laser light is used to indicate the reflection position of the line laser light searched by the robot in the current frame of image on the surface of the object to be detected. In this embodiment, in the current frame of image, the pixels where the positions of line laser light do not exist are the pixels with strong ambient light interference.

In Step 2, except for the row of pixels where the positions of line laser light do not exist is determined in Step 1, the robot traverses the other relevant rows of the current frame of image in sequence, specifically traverses the pixels in the row where the initial pixel position exists; in the current row of the current frame of image, the robot takes the initial pixel position in the current row as the search center, and then searches for pixels within a search radius upward along the current row from the search center; optionally, the robot takes a first preset pixel distance as the search radius, and searches for pixels that meet the convex hull characteristic upward and downward along the row direction respectively from the initial pixel position in the current row; the current row is a row currently traversed by the robot, and the search radius is also applicable to defining the coverage area in two opposite row directions of the same row; the two opposite row directions of the same row include the direction of searching upward along the same row and the direction of searching downward along the same row starting from the initial pixel position. Then, for a currently determined search center, the convex hull center pixel in the current row is selected according to the difference in the brightness value of the pixel searched upward and the brightness value of the pixel searched downward under the search states corresponding to the two search centers determined successively, and the inter-frame matching relationship formed by the same type of numerical values in the same row of pixels of the current frame of image relative to the reference frame of image, and then the convex hull center pixel determined in the current row of the current frame of image last time is updated with the convex hull center pixel in the current row that has been selected; whenever the search center in the current row is updated once, the convex hull center pixel determined in the current row is also updated once, and each pixel within the search radius relative to the initial pixel position is traversed in the current row and the convex hull center pixel is updated to determine the final convex hull center pixel of the current row. In some embodiments, due to multiple reflections of the line laser light, multiple pixels that meet the convex hull characteristics will be generated in the same row of the current frame of image, and two or more convex hull center pixels will be updated at the same time, and finally two or more convex hull center pixels are determined in the current row, and then the offsets of these convex hull center pixels relative to the origin of the coordinate system of the current frame of image are compared, and the convex hull center pixel with the smallest absolute value of the longitudinal coordinate offset is selected to be updated as the convex hull center pixel finally determined in the current row. If the longitudinal coordinate of the origin of the coordinate system of the current frame of image represents the longitudinal coordinate of the robot's travel plane, then the convex hull center pixel finally determined in the current row is the convex hull center pixel in the current row of the current frame of image that is closest to the ground.

The reference frame of image is configured as a frame of bright image where the positions of line laser light are found by the robot most recently before the current frame of image is captured. The position of line laser light most recently found by the robot is selected from the convex hull center pixels of the corresponding row. The difference between the brightness values of the pixels searched upward and the brightness values of the pixels searched downward can be extended to the numerical relationship between the brightness value gradient generated in the pixels searched upward and the brightness value gradient generated in the pixels searched downward, which can be compared between the search states corresponding to the two search centers determined successively, thereby conducive to selecting the convex hull center pixel from the searched pixels that meet the convex hull characteristics, and the brightness values of the currently determined search center searched upward and downward respectively, and the brightness values of the search center determined last in the same row are compared respectively. The search centers determined twice successively are respectively a currently determined search center and a last determined search center in the same row, which can be two search centers determined by searching the pixels within the search radius in two rounds in the upward direction of the current row starting from the initial pixel position, selecting and updating the convex hull center pixels in the same row; it can also be two search centers determined by searching the pixels within the search radius in two rounds in the downward direction of the current row starting from the initial pixel position, selecting and updating the convex hull center pixels in the same row. One round of searching corresponds to one search center, and further corresponds to a search state in the pixel area of different rows, and the update range of the search center is within the coverage area of a search radius relative to the initial pixel position, including the initial pixel position, so as to update the convex hull center pixels of the same row, and continuously select more accurate convex hull centers to represent the position of line laser light. The inter-frame matching relationship includes matching in the number of pixels and brightness values between the two frames of images, and the two frames of images may be two successive frames of images, or two bright frames of images separated by one or more frames of images, and the specific matching involved can be based on the change in brightness value and vertical coordinate of the pixels at the same reflection position of the line laser light on the surface of the obstacle in the image captured in real time during the walking process of the robot.

On this basis, whenever the robot, according to Step 2, traverses each pixel within a search radius upward along the current row from the search center and selects and updates the convex hull center pixel, and also traverses each pixel within a search radius downward along the current row from the search center and selects and updates the convex hull center pixel, the robot starts to traverse the pixels within the search radius from the initial pixel position of the next row of the current frame of image.

In Step 1, when the current frame of image is a frame of bright image and the previous frame of image is a frame of dark image, the robot saves the previous frame of image. If the robot has searched for the corresponding positions of line laser light (including the position of line laser light in the corresponding row or the positions of line laser light on all rows) from the previous frame of image before executing the current Step 1, the previous frame of image is marked as a reference frame of image; preferably, the reference frame of image is configured as a frame of bright image where the position of line laser light is found by the robot most recently before the current frame of image is captured, the position of line laser light found by the robot most recently is a convex hull center pixel from the corresponding row; specifically, in the corresponding row, with the initial pixel position as the center, within a search radius coverage area in the upward direction of the corresponding row and within a search radius coverage area in the downward direction of the corresponding row, all pixels are updated as the search center in sequence, and then a new convex hull center pixel is determined according to Step 2.

In Step 3, for the convex hull center pixels in each row of pixels that have been selected by the robot, the robot, based on the relationship between the brightness value in the effective coverage area corresponding to the positioning coordinate of the line laser light emitted from the line laser transmitter in the previous frame of dark image and the brightness value of the convex hull center pixel in the current frame of image, first determines the convex hull center pixels that are interference points, and then removes the interference points from the selected convex hull center pixels; the robot may remove the interference points in the current frame of image by traversing in a row-by-row way to eliminate the interference of ambient light. After the robot traverses the convex hull center pixels among all rows of pixels in the current frame of image to eliminate all interference points, the coordinates of the remaining convex hull center pixels are determined as the positioning coordinates of the line laser light emitted from the line laser transmitter in the current frame of image, and the robot searches for the position of line laser light determined in each row in the current frame of image so as to connect the positions to acquire the laser light segment formed by the line laser light emitted from the line laser transmitter on the surface of the object to be detected, and determines that the robot has searched for the position of line laser light from the current frame of image by executing the inter-frame tracking algorithm; the position of line laser light determined in the same row is the position of the convex hull center pixel that was last updated in the same row after the robot traverses all pixels in the same row, and the coordinates of a position of line laser light are represented by the corresponding positioning coordinates. Since the robot acquires the position of line laser light on the corresponding row by traversing the current frame of image row by row when executing Steps 1 to 3, after determining the row number of the current traversal, the coordinates of each position of line laser light can be represented by only the ordinate value to identify the height information of the reflection position of the line laser light on the obstacle surface, which can also be used for the robot to avoid obstacles.

Specifically, in Step 2, except for the row of pixels where the positions of line laser light do not exist, the robot sets the initial pixel position acquired in the current row in Step 1 as the search center, that is, the initial pixel position in Step 2 in the aforementioned embodiment. Whenever a convex hull center pixel is selected for a search center, an adjacent pixel searched upward or downward along the current row from the search center is updated as the search center, and Step 2 is re-executed to acquire a new convex hull center pixel and update the new convex hull center pixel as the convex hull center pixel; each of the search centers is within a coverage area of a search radius relative to the initial pixel position, and the search radius is set to a first preset pixel distance; preferably, the first preset pixel distance is less than the maximum pixel distance covered by the current frame of image, and is within the detection range of the camera, so as to limit the search for the convex hull center pixel to the vicinity of the initial pixel position. In this embodiment, the convex hull center pixel is a pixel that meets the convex hull characteristic within the coverage range of the search radius. Preferably, the convex hull characteristic here is a characteristic of a pattern formed by a line laser light emitted on the surface of an obstacle, and the characteristic of the pixels in the coverage area of the pattern may be the brightness values of the pixels within the coverage area of the pattern itself, or the brightness values of the pixels within the coverage area of the inscribed circle of the pattern, or the brightness values of the pixels within the coverage area of the circumscribed circle of the pattern. It is worth noting that the convex hull center pixel that has been selected is the last updated convex hull center pixel in each row of the current frame of image where the convex hull center pixels exist (or can be searched). The convex hull center pixel that has been selected is the convex hull center pixel that is closest to the origin of the coordinate system of the current frame of image in each row of the current frame of image where convex hull center pixels exist. Preferably, the convex hull center pixel is not necessarily updated in each row in the current frame of image, so the final laser light segment formed by connecting the convex hull center pixels is not continuous, which can be used to represent the obstacles raised from the ground where the robot is moving.

In this embodiment, the robot sets the group of pixels that meet the convex hull characteristics in the current row of the current frame of image as the group composed of pixels whose brightness values decrease from the convex hull center pixel along the current row to the upper and lower sides respectively and the convex hull center pixel, which forms the convex hull. This can be regarded as a pattern surrounding a laser light segment, which is used to detect the local effective detection area on the obstacle surface where the reflection position of the line laser light is located. The convex hull center pixel is the pixel with the largest brightness value in the pixel group, and the convex hull center pixel is set as the pixel at the center of the convex hull. In the group of pixels that meet the convex hull characteristics, starting from the center of the convex hull in the upward direction along the same row, the brightness values of the pixels decrease upward along the current row and generates a first gradient value between the brightness values of two adjacent pixels, and starting from the center of the convex hull in the downward direction along the same row, the brightness values of the pixels decrease downward along the current row and generates a second gradient value between the brightness values of two adjacent pixels, so that the convex hull center belongs to the search center. In the neighborhood of the convex hull center, there is at least one pixel whose brightness value is equal to the brightness value of the search center. Therefore, in the group of pixels that meet the convex hull characteristics, starting from the convex hull center, the brightness values decrease upward along the current row to generate a first gradient value, and the brightness values decrease downward along the current row to generate a second gradient value. The pixel distance required to traverse upward from the convex hull center may be less than or equal to the search radius, and the pixel distance required to traverse downward from the convex hull center may be less than or equal to the search radius, so as to form a predetermined brightness value gradient changing in the convex hull. If the changing of the brightness values of multiple pixels traversed in the same convex hull does not conform to the predetermined brightness value gradient changing.

Preferably, the brightness value of the search center is 255, that is, the maximum grayscale value (maximum grayscale level) acquired by dividing the brightness value of the image in a binary manner. It should be noted that the brightness of a pixel is used to represent the brightness of the light irradiating the surface of the object to be detected. When the grayscale value is used to represent the brightness value, the higher the grayscale value, the brighter the image, and the greater the brightness value. The grayscale image formed by image binarization contains only brightness information but no color information, just like a black and white picture, where the brightness changes continuously from dark to bright. Therefore, to represent a grayscale image, it is necessary to quantize the brightness value, which is usually divided into 256 levels from 0 to 255, the value 255 is used in this embodiment to represent a brightness value. When the grayscale value ranges from 0 to 255, this embodiment also represents the value range of the brightness value of the pixel as a value from 0 to 255. Then, each frame of the image captured by the camera can be regarded as converted into a grayscale image, the brightness is the grayscale, and the larger the grayscale value, the larger the brightness value. The value 0 can represent the blackest pixel, and the value 255 can represent the whitest pixel. The pixel mentioned in this embodiment is an indivisible unit in a frame of image. Each frame of image is composed of many pixels. It is a cell of a single color in a grid and can be mapped to a cell (grid unit) in a grid map. In the grayscale image, a capacity of one byte is used to store a pixel.

As an embodiment, in Step 2, in each row of each frame of image with an initial pixel position except for the row of pixels where the positions of line laser light do not exist, the method of selecting the convex hull center pixel according to the difference between the brightness values of the pixels searched upward and the brightness values of the pixels searched downward in the search states corresponding to the two search centers determined successively, and the inter-frame matching relationship formed by the same type of values of the current frame of image in the same row of the pixel relative to the reference frame of image includes the followings.

In the current row of the current frame of image, the robot starts from the search center and searches for the pixels that meet the convex hull characteristics upward or downward along the row direction. During this process, the brightness value of the search center is controlled to be compared with the brightness value of the convex hull center pixel located in the same row searched last time. The difference in brightness values can be used but is not limited to determine the numerical relationship between the two. The convex hull center pixel located in the same row searched last time is the convex hull center pixel selected in the same row of the current frame of image for the search center determined last time, and the search center determined last time is a pixel adjacent to the currently determined search center downward or upward in the current row of the current frame of image. Furthermore, the row order of the pixels in the same row of the reference frame of image is equal to the row order of the current row of the current frame of image, and the convex hull center pixels in a line with the same ordering in the reference frame of image do not necessarily have the same row order.

If the robot detects that the brightness value of the search center is greater than the brightness value of the convex hull center pixel located in the same row searched last time, then in the current row, the pixels are searched upward from the search center, and the number of pixels whose brightness values decrease according to the first gradient value is counted, that is, whenever a pixel with a decreasing brightness value is searched upward, and the brightness value of the currently searched pixel is reduced once by the first gradient value relative to the brightness value of the pixel searched last time (the brightness value of a pixel below the currently searched pixel), the number of pixels whose brightness values decrease according to the first gradient value is counted plus one. This can be understood as the robot searching upward along the current row of the current frame of image for pixels that meet the convex hull characteristics until the upward counting stop condition is met.

Preferably, the first gradient value changes adaptively with the change of the number of searches. For example, the closer the currently searched pixel is to the upper edge of the convex hull, the larger the first gradient value becomes. In the same convex hull, the closer the pixel is to the upper edge of the convex hull, the more drastic the decrease in brightness value, satisfying a predetermined brightness value gradient changing. When the upward counting stop condition is met, the counting of the number of pixels whose brightness values decrease according to the first gradient value is stopped. At this time, the robot also stops searching for pixels along the row direction, and then marks the number of pixels whose brightness values decrease according to the first gradient value as the upward gradient descent number.

The robot also searches for pixels downward from the search center, and counts the number of pixels whose brightness values decrease according to the second gradient value, that is, whenever a pixel whose brightness value decreases is searched downward, and the brightness value of the currently searched pixel is reduced once by the second gradient value relative to the brightness value of the pixel searched last time (the brightness value of a pixel above the currently searched pixel), the number of pixels whose brightness values decrease according to the second gradient value is counted plus one. This can be understood as the robot searching downward along the current row of the current frame of image for pixels that meet the convex hull characteristics until the downward counting stop condition is met.

Preferably, the second gradient value changes adaptively with the change of the number of searches. For example, the closer the currently searched pixel is to the lower edge of the convex hull, the larger the second gradient value becomes. In the same convex hull, the closer the pixel is to the lower edge of the convex hull, the more drastic the decrease in brightness value, satisfying a predetermined brightness value gradient changing. When the downward counting stop condition is met, stop counting the number of pixels whose brightness values decrease according to the second gradient value, and then mark the number of pixels whose brightness values decrease according to the second gradient value as the downward gradient descent number.

After determining to stop searching and counting upward from the search center along the current row of the current frame of image, and determining to stop searching and counting downward from the search center along the current row of the current frame of image, when the robot determines that the upward gradient descent number counted in the current row of the current frame of image is greater than or equal to the upward gradient descent number counted in the same row of the reference frame of image (the row order of a row involved in comparison in the reference frame of image is equal to the row order of the current row of the current frame of image, which may be counted as the current row of the reference frame of image), and/or determines that the downward gradient descent number counted in the current row of the current frame of image is greater than or equal to the upward gradient descent number counted in the same row of the reference frame of image (the row order of a row involved in the comparison in the reference frame of image is equal to the row order of the current row of the current frame of image, which may be counted as the current row of the reference frame of image), it indicates that the robot is approaching the obstacle to be detected, and in this process, the number of pixels that meet the convex hull characteristics used to characterize the same local area of the obstacle has increased before the installation height increases. Then, the number of pixels that meet the convex hull characteristics that can be searched in the current frame of image increases, and the robot can detect more details of the obstacle. Although there is a risk of collision after it approaches to the obstacle, but after the current frame of image is switched to a frame of dark image or after the next frame of image (frame of dark image) is captured, it will switch to executing the brightness centroid algorithm to avoid obstacles. On this basis, among the pixels traversed in the current row of the current frame of image, if it is detected that the first gradient value and the second gradient value are not equal to the first preset gradient parameter, and the absolute value of the difference between the first gradient value and the second gradient value is less than the second preset gradient parameter, and the absolute value of the difference between the brightness value of the pixel with the smallest brightness value searched upward along the current row and the brightness value of the pixel at the currently determined search center is greater than the absolute value of the difference in brightness values of the same type formed by searching upward among the pixels in the same row of the reference frame of image, and the absolute value of the difference between the brightness value of the pixel with the smallest brightness value searched downward along the current row and the brightness value of the pixel at the currently determined search center is greater than the absolute value of the difference in brightness values of the same type formed by searching downward among the pixels in the same row of the reference frame of image, the robot marks the currently determined search center as the convex hull center pixel, and determines that the matching relationship formed by the same type of values of the current frame of image relative to the reference frame of image in the same row of pixels meets the expected change in the position of the pixels in the convex hull during the robot's walking process.

Specifically, the absolute value of the difference in brightness values of the same type formed by searching upward among pixels in the same row of the reference frame of image is the absolute value of the difference between the brightness value of the pixel with the smallest brightness value searched upward in a row with the same row order as the current row in the reference frame of image, starting from the search center finally determined in the row with the same row order as the current row, and the brightness value of the search center finally determined in the same row, the distance between the pixel with the smallest brightness value searched upward and the search center finally determined in the same row is less than or equal to the search radius. Furthermore, the absolute value of the difference in brightness values of the same type formed by searching downward among pixels in the same row of the reference frame of image is the absolute value of the difference between the brightness value of the pixel with the smallest brightness value searched downward along the same row with the same row order as the current row, starting from the search center finally determined in the row with the same row order as the current row in the reference frame of image, and the brightness value of the search center finally determined on the same row, the distance between the pixel with the smallest brightness value searched downward and the search center finally determined on the same row is less than or equal to the search radius.

Since the absolute value of the difference in brightness between the pixels with the smallest brightness values in the two opposite directions is increasing, the pixel offset of the pixel used to characterize the same reflection position of the line laser light relative to the center of the image in the same frame of image (which can also be understood as the coordinate offset relative to the origin of the coordinate system in the coordinate system of the image) increases, and it is further determined that the robot is approaching the obstacle to be detected, and in this process, the number of pixels used to characterize the same local area of the obstacle increases before the installation height increases, then the number of pixels that can be searched in the current frame of image increases, and the robot can detect more details of the obstacle, which proves that the convex hull center pixel among the pixels searched in the current row of the current frame of image is a point that relatively accurately represents the laser light segment of the line laser light emitted on the surface of the obstacle to be detected, until the convex hull center pixel of all rows of the same frame of image is traversed and updated, the position of line laser light in each row is acquired and connected or fitted as a laser light segment representing the line laser light, so as to realize the positioning of the obstacle where the laser light segment is located, facilitating the robot to avoid obstacles in time.

It should be noted that in the process of executing Step 2, the robot first searches for pixels in sequence along a row of the current frame of image upwards from the search center until all pixels within a search radius are searched along a row of the current frame of image upwards, and then searches for pixels in sequence along a row of the current frame of image downwards from the same search center until all pixels within a search radius are searched along a row of the current frame of image downwards. Alternatively, the robot first searches for pixels in sequence along a row of the current frame of image downwards from the search center until all pixels within a search radius are searched along a row of the current frame of image downwards, and then searches for pixels in sequence along a row of the current frame of image downwards from the same search center until all pixels within a search radius are searched along a row of the current frame of image upwards.

Preferably, during the execution of the laser positioning method, when the reference frame is the first frame of image of the reflected light of the line laser light reflected back from the surface of the object to be detected and captured by the camera, and when the convex hull center pixel in the same row of pixels of the reference frame of image is the initial pixel position in the same row of the reference frame of image, the initial pixel position in the same row of the reference frame of image is the position of line laser light in the same row of the reference frame of image, which best represents a point of the laser light segment of the line laser light emitted on the surface of the object to be detected. During the execution of the laser positioning method, the first frame of image, captured by the camera, of the reflected light of the line laser light reflected back from the surface of the object to be detected is a frame of bright image, which is recorded as the first frame of image after the line laser transmitter emits the line laser light, and may be recorded as the first frame of bright image.

It should be noted that the first preset gradient parameter is smaller than the second preset gradient parameter. The first preset gradient parameter has preferably a value of 0 to avoid selecting pixels that meet the convex hull characteristics in a pixel area with a constant brightness value (such as a local overexposed area, although the pixels inside it may be the convex hull center pixel). The second preset gradient parameter has preferably a value of 25 to control the coordinate jump of the pixels at the same reflection position used to characterize the obstacle within a controllable range, avoid introducing pixels with drastic changes in brightness values, and only focus on the effective detection area of the obstacle to be detected. It can reduce the search amount and calculation amount, and also improve the detection accuracy.

For a currently determined search center, Step 2 corresponding to the above embodiment also includes a stop condition for the searching for pixels along the row direction (the upward counting stop condition and the downward counting stop condition), specifically including the followings.

If the brightness value of the pixel at the search center is greater than the brightness value of the convex hull center pixel located in the same row searched last time, it indicates that the brightness value of the pixel at the search center (initially the initial pixel position) of the current row of the current frame of image is not equal to the brightness value of the reasonable convex hull center searched last time, and as the robot approaches the obstacle, the difference in brightness values between the two increases, the convex hull center pixel located in the same row searched last time is the convex hull center pixel selected in the same row of the current frame of image for the search center determined last time, and the search center determined last time is a pixel adjacent to the currently determined search center in the current row of the current frame of image downward or upward. The robot starts searching for pixels upward from the search center in the current row of the current frame of image, with the goal of searching for pixels upward from the search center in order to select the convex hull center pixels in the current row by counting the pixels that meet the convex hull characteristics; and searches for pixels downward from the search center in order to select the convex hull center pixels in the current row by counting the pixels that meet the convex hull characteristics. Specifically, in the current row of the current frame of image, the number of pixels whose brightness values decrease according to the first gradient value is counted upward from the search center. Preferably, starting from the search center, each time a pixel that meets the convex hull characteristic is searched upward along the current row, the count is increased by one to acquire the number of pixels whose brightness values decrease according to the first gradient value; and in the current row of the current frame of image, the number of pixels whose brightness values decrease according to the second gradient value is counted downward from the search center to realize the search for pixels that meet the convex hull characteristics upward and downward along the row direction from the corresponding initial pixel position. Preferably, starting from the search center, each time a pixel that meets the convex hull characteristic is searched downward along the current row, the count is increased by one to acquire the number of pixels whose brightness values decrease according to the second gradient value.

In some embodiments, if the robot detects that the brightness values of the pixels are not decreasing according to the first gradient value during the upward search from the search center, the preset upward gradient abnormality count number is increased by one, and then the robot determines whether it has searched all the pixels covered within the search radius upward along the current row of the current frame of image. If so, the robot stops searching for pixels upward along the current row of the current frame of image and determines that the upward counting stop condition is met, and then performs Step 2 to select the convex hull center pixel, and then starts to update an adjacent pixel searched upward from the search center along the current row as the search center, and then repeats Step 2 to update the convex hull center pixel; otherwise, when the upward gradient abnormality frequency is greater than the first preset error number, it stops searching for pixels upward along the current row of the current frame of image and determines that the upward counting stop condition is met, and then continues to perform Step 2 to select the convex hull center pixel, and then starts to update an adjacent pixel searched upward from the search center along the current row as the search center, and then repeats Step 2 to update the convex hull center pixel, until all the pixels covered within the search radius are searched upward relative to the initial pixel position.

In some embodiments, during the downward search from the search center, if it is detected that the brightness values of the pixels are not decreasing according to the second gradient value, the preset downward gradient abnormality count number is increased by one, and then the robot determines whether it has searched all the pixels covered within the search radius downward along the current row of the current frame of image. If so, the robot stops searching the pixels downward along the current row of the current frame of image and determines that the downward counting stop condition is met, and then according to, in Step 2, the difference between the brightness value of the pixel searched upward and the brightness value of the pixel searched downward under the search states corresponding to the two search centers determined successively, and the inter-frame matching relationship formed by the same type of values in the same row of the current frame of image relative to the reference frame of image, the convex hull center pixel is selected, and then the adjacent pixel searched downward from the search center along the current row is searched and updated as the search center, and Step 2 is repeated to update the convex hull central pixel; otherwise, when the upward gradient abnormality frequency is greater than the second preset error number, it stops searching for pixels downward along the current row of the current frame of image and determines that the downward counting stop condition is met, and then according to, in Step 2, the difference in the brightness value of the pixel searched upward and the brightness value of the pixel searched downward under the search states corresponding to the two search centers determined successively, and the inter-frame matching relationship formed by the same type of values of the pixels in the same row of the current frame of image relative to the reference frame of image, the convex hull center pixel is selected, and then an adjacent pixel searched upward along the current row starting from the search center is updated as the search center, and Step 2 is repeated to update the convex hull central pixel until all the pixels covered within the search radius are searched upward relative to the initial pixel position.

Regarding the first preset error number and the second preset error number, it is to be supplemented that if the pixels searched within the search radius do not conform to the convex hull characteristic within a certain error tolerance range under the consideration that the search center is not necessarily the convex hull center, then it is necessary to set the preset error numbers for judgment. The source of the error lies in the fact that the reflection position formed by the line laser light of the same emission angle captured during the robot's walking process from the surface of the same object to be detected will undergo a longitudinal jump, which is reflected in the upward displacement of the pixels used to represent the same reflection position in different frame of images along the vertical axis. Therefore, if the robot detects that the brightness values of the pixels are not decreasing according to the first gradient value during the process of counting upward from the search center, and/or detects that the brightness values of the pixels are not decreasing according to the second gradient value during the process of counting downward from the search center, it is determined that the gradient value between two adjacent pixels searched along one of the row directions is abnormal, and the preset gradient abnormality count number is increased by one; when the robot detects that the gradient abnormality frequency is greater than the preset error number, and/or the pixels covered within the search radius are counted, the robot stops counting and stops searching for pixels that meet the convex hull characteristics.

In some embodiments, during the process of searching upward from the search center, the robot counts the pixels whose brightness value is 255 and whose positions are adjacent to each other along the current row of the current frame of image upward, and marks the number of pixels whose brightness value is 255 and whose positions are adjacent to each other as the upward overexposure number, thereby forming a count of the number of overexposed areas where the pixels whose brightness value is 255 are continuous at the search center in the upward direction. Then the robot determines whether it has searched all the pixels covered within the search radius upward along the current row of the current frame of image. If so, the robot stops searching all the pixels covered within the search radius upward along the current row of the current frame of image and determines that the upward counting stop condition is met, and then performs Step 2 to select the convex hull center pixel, and then starts to update an adjacent pixel searched upward along the current row from the search center as the search center, and then repeats Step 2 to update the convex hull center pixel; otherwise, when the robot detects that the upward overexposure number is greater than the third preset error number, it stops searching pixels upward along the current row of the current frame of image and determines that the upward counting stop condition is met, and then continues to perform Step 2 to select the convex hull center pixel, and then starts to update an adjacent pixel searched upward along the current row from the search center as the search center, and then repeats Step 2 to update the convex hull center pixel, until all the pixels covered within the search radius are searched upward relative to the initial pixel position. Implementation: When the robot detects that the upward overexposure number is greater than the third preset error number, and/or the pixels covered within the search radius are counted upward along the current row of the current frame of image, the robot stops searching for pixels upward along the current row of the current frame of image and determines that the upward counting stop condition is met.

In some embodiments, while searching downward from the search center, the robot counts the pixels whose brightness value is 255 and whose positions are adjacent to each other along the current row of the current frame of image downward, and marks the number of pixels whose brightness value is 255 and whose positions are adjacent to each other as the downward overexposure number, thereby forming a count of the number of overexposed areas where the pixels whose brightness value is 255 are continuous at the search center in the downward direction. Then the robot determines whether it has searched all the pixels covered within the search radius downward along the current row of the current frame of image. If so, the robot stops searching pixels downward along the current row of the current frame of image and determines whether the downward counting stop condition is met, and then performs Step 2 to select the convex hull center pixel, and then starts to update an adjacent pixel searched downward along the current row from the search center as the search center, and then repeats Step 2 to update the convex hull center pixel; otherwise, when the robot detects that the downward overexposure number is greater than a fourth preset error number, it stops searching pixels downward along the current row of the current frame of image and determines whether the downward counting stop condition is met, and then continues to perform Step 2 to select the convex hull center pixel, and then starts to update an adjacent pixel searched downward along the current row from the search center as the search center, and then repeats Step 2 to update the convex hull center pixel, until all the pixels covered within the search radius are searched downward relative to the initial pixel position. Implementation: When the robot detects that the upward overexposure number is greater than the fourth preset error number, and/or the pixels covered within the search radius are counted downward along the current row of the current frame of image, the robot stops searching for pixels downward along the current row of the current frame of image and determines that the downward counting stop condition is met. Implementation: When the robot detects that the upward overexposure number is greater than the fourth preset error number, and/or the pixels covered within the search radius are counted downward along the current row of the current frame of image, the robot stops searching for pixels downward along the current row of the current frame of image and determines that the downward counting stop condition is met.

In summary, in each round of searching for the convex hull center pixel near the search center, the robot determines the stop search condition by comparing the brightness of a pair of pixels searched in opposite directions starting from the search center and counting the overexposure and gradient abnormalities.

As an embodiment, in Step 3, the method for eliminating interference points from the selected convex hull center pixels according to the numerical relationship between the brightness value in the effective coverage area corresponding to the positioning coordinates of the line laser light emitted from the line laser transmitter in the previous frame of dark image and the brightness value of the convex hull center pixel in the current frame of image includes: after the robot traverses all rows of pixels in the current frame of image and acquires the convex hull center pixel from the current frame of image, and also saves the positioning coordinates of the line laser light emitted from the line laser transmitter in the previous frame of dark image, for each convex hull center pixel in the current frame of image, in the circular area where the positioning coordinates of the line laser light emitted from the line laser transmitter in the previous frame of dark image are located at the center of the circle, and the detection pixel distance is the radius, if the robot determines that there is at least one pixel in the circular area whose brightness value is greater than the brightness value of the convex hull center pixel with the same coordinates as the center of the circle in the current frame of image by a preset ambient light brightness threshold, then the robot determines that the convex hull center pixel with the same coordinates as the center of the circle in the current frame of image is an interference point, and there is ambient light interference in the vicinity of the convex hull center pixel with the same coordinates as the center of the circle in the current frame of image, causing the robot to be unable to find the position of line laser light at the interference point, then it is necessary to remove the interference point from the current frame of image to address the interference of ambient light and reduce positioning misjudgment; the circular area is the effective coverage area corresponding to the positioning coordinates, and preferably, the radius of the circular area (detection pixel distance) is not equal to the search radius; in the process of executing the inter-frame tracking algorithm, the current frame of image is a frame of bright image, and the previous frame of image is a frame of dark image, that is, the previous frame of dark image. At this time, the position of line laser light in the previous frame of dark image has been output by the brightness centroid algorithm, and the positioning coordinates in the previous frame of dark image (the coordinates of the position of line laser light determined in one row) are used; in this embodiment, the robot selects the position in the previous frame of dark image as the coordinates of the pixel at the center of the circle are same as the coordinates of a convex hull center pixel acquired in the current frame of image, and the brightness value of the convex hull center pixel with the same coordinates as the center of the circle in the current frame of image can be used for comparison, the preset ambient light brightness threshold is specifically associated with the robot's travel speed or rotation speed. Preferably, the greater the robot's travel speed or rotation speed, the more drastic the position jump of the pixels used to represent the same reflection position in the image captured by the robot in real time, and the greater the gradient difference between the brightness values of the two pixels, and the preset ambient light brightness threshold is set to be larger to adapt to the denoising accuracy.

As an embodiment, in Step 1, the method of excluding pixels where the positions of line laser light do not exist from the current frame of image based on pixels in the corresponding row that meet the preset brightness distribution characteristics includes: if the brightness value of the initial pixel position in the current row of the current frame of image is greater than the brightness value of the pixel at the position of line laser light in the same row found in the previous round by a first preset brightness threshold, or the brightness value of the initial pixel position in the current row of the current frame of image is greater than the brightness value of the pixel at the position of line laser light in the same row found in the previous round by a second preset brightness threshold, starting from a position one reference pixel distance away from the initial pixel position in the current row of the current frame of image upwards, searching for pixels along the current row of the current frame of image downwards; the first preset brightness threshold is less than the second preset brightness threshold, the first preset brightness threshold has preferably a value of 10, and the second preset brightness threshold has preferably a value of 235. When the brightness value of the initial pixel in the current row of the current frame of image changes little relative to the brightness value generated at the position of line laser light in the same row found in the previous round, or the brightness value generated at the position of line laser light in the same row found in the previous round is large enough to be close to 255 (the highest grayscale value), the current row may be affected by ambient light, and a reference position is required to start searching for pixels along the current row of the current frame of image to exclude pixels with abnormal brightness values or the row where they are located, and the sum of the first preset brightness threshold and the second preset brightness threshold is less than 255 (the highest grayscale value), then the first preset brightness threshold and the second preset brightness threshold are used as the brightness value determination conditions for the rows to be excluded in the rough selection.

Then, in the process of searching for pixels, if it is detected that the brightness value of a pixel currently being searched is greater than the brightness value of the pixel at the position of line laser light in the same row found in the previous round by a first preset brightness threshold, or it is detected that the brightness value of a pixel currently being searched is equal to 255 (the highest grayscale value), the error position count number is increased by one, and it is determined that the pixel currently being searched is a pixel that meets the preset brightness distribution characteristic, and the vicinity of the initial pixel in the current row of the current frame of image may have a brightness value greater than the brightness value of the pixel at the position of line laser light in the same row found in the previous round by the first preset brightness threshold, or may have a brightness value equal to 255 (the highest grayscale value), which is easily affected by ambient light; the reference pixel distance is represented by the number of pixels so that the reference pixel count threshold is equal to the reference pixel distance.

When the robot detects that the error position count number is greater than the reference pixel count threshold, it is determined that the position of line laser light is not in the current row of the current frame of image, then the pixels in the current row of the current frame of image are set as pixels where the positions of line laser light do not exist, and then the pixels in the current row of the current frame of image are excluded from the pixel search range of Step 2, and at the same time, it is determined that the light intensity of the environment in which the robot is located is greater than the first preset light intensity threshold, indicating that there is strong ambient light interference in the area from the position of the reference pixel distance upward from the initial pixel position in the current row of the current frame of image along the current row of the current frame of image to the position where the lowest pixel in the current row of the current frame of image is located; the reference pixel count threshold has preferably a value of 25, and is set equal to the reference pixel distance, then when the error position count amount is greater than the position offset of the search starting point of the pixel that meets the preset brightness distribution characteristic in this embodiment relative to the initial pixel position of the same row, it is determined that the position of line laser light cannot be searched in the current row of the current frame of image, and there is ambient light interference. Thereby, the reference test area set in the same row is traversed line by line to compare the pixels whose brightness meets the requirements and the number of times is recorded to determine the strong ambient light.

Preferably, the reference pixel distance is equal to the pixel distance composed of 25 pixels. Then, starting from a position 25 pixels upward from the initial pixel position in the current row of the current frame of image, pixels are searched downward along the current row of the current frame of image until the current row of the current frame of image is traversed to the bottom, and a reference test area is formed in the current row, the area formed by starting from a position one reference pixel distance upward from the initial pixel position in the current row of the current frame of image and extending downward along the current row of the current frame of image to the bottom of the current row of the current frame of image is the reference test area; in the process of traversing each pixel in the reference test area, whenever it is detected that the brightness value of a pixel currently traversed is 10 greater than the brightness value of the pixel at the position of line laser light found in the previous round and located in the same row, or it is detected that the brightness value of a pixel currently traversed is equal to 255 (the highest grayscale value), it is increased by one, and it is determined that the pixel currently searched is a pixel that meets the preset brightness distribution characteristic, until the number of pixels that meet the preset brightness distribution characteristic is greater than 25. The sum of the reference pixel distance (or reference pixel count threshold) and the second preset brightness threshold is greater than 255 (the highest grayscale value), and the sum of the first preset brightness threshold and the second preset brightness threshold is less than 255. The changes in the brightness values at the initial pixel position in the current row of the current frame of image relative to the position of line laser light found in the same row in the previous round and the changes in the brightness values of the pixels searched in the current row of the current frame of image are acquired by comparison, reflecting the ambient light intensity of the area corresponding to the current row.

It should be noted that the position of line laser light located in the same row found in the previous round is the position of the convex hull center pixel finally determined in the same row of pixels belonging to the reference frame of image, that is, the position of line laser light is determined in the same row of pixels of the reference frame of image (the position of the convex hull center pixel set after removing the interference points in the aforementioned embodiment), and the same row of pixels of the reference frame of image is a row of pixels in the reference frame of image with the same row order as the current row of the current frame of image; each time the position of line laser light in the same row is set in a frame of bright image, it is recorded as a round of finding the position of line laser light located in the same row of the corresponding image, and each round of corresponding search images are different frames of image.

As an embodiment, in Step 1, the method of excluding the pixels where the positions of line laser light do not exist from the current frame of image according to the pixels in the corresponding row that meet the preset brightness distribution characteristics includes:

The initial pixel position in the current row of the current frame of image is set as the center of the ring, in the current row of the current frame of image, the pixels covered by the ring area with an inner radius of the first positioning radius and an outer radius of the second positioning radius located below the center of the ring are marked as the first pixels to be tested; which is equivalent to: taking the initial pixel position in the current row of the current frame of image as the center of the circle, setting a first circle with a first radius of the first positioning radius; at the same time, taking the initial pixel position in the current row of the current frame of image as the center of the circle, setting a second circle with a second radius of the second positioning radius, the first positioning radius is smaller than the second positioning radius; and then below the initial pixel position (in the downward direction of the current row), marking the pixels covered by the ring area enclosed by the second circle and the first circle in the current row of the current frame of image as the first pixels to be tested.

Then, the average value of the brightness values of the first pixels to be tested is calculated, that is, the ratio of the sum of the brightness values of all the first pixel to be tested in the current row of the current frame of image to the total number of the first pixels to be tested in the current row of the current frame of image is acquired, as the average value of the brightness values of the first pixels to be tested; the ring coverage area enclosed by the first circle and the second circle serves as a transition area for determining the change in light intensity, which depends on the settings of the first positioning radius and the second positioning radius. The first positioning radius is preferably 3, and the second positioning radius is preferably 12. It can be expressed by pixel distance, and the unit is the number of pixels, to form a sufficiently large transition area for determining the change in light intensity.

If the average brightness value of the first pixels to be tested is greater than the brightness value of the pixel at the position of line laser light in the same row found in the previous round, it is determined that the first pixels to be tested are pixels that meet the preset brightness distribution characteristics, and it is determined that the position of line laser light is not in the current row of the current frame of image, and there is strong ambient light interference in the reflection area corresponding to the current row of the current frame of image, then the pixels in the current row of the current frame of image are set as pixels where the positions of line laser light do not exist, and then the pixels in the current row of the current frame of image are excluded from the pixel search range in Step 2, and at the same time, it is determined that the light intensity of the environment in which the robot is located is greater than the first preset light intensity threshold; the position of line laser light in the same row found in the previous round is the position of the convex hull center pixel finally determined in the same row of pixels belonging to the reference frame of image, preferably the initial pixel position in the same row of pixels of the reference frame of image, and the same row of pixels of the reference frame of image is a row with the same row order as the current row of the current frame of image.

Similarly, the initial pixel position in the current row of the current frame of image is set as the center of the ring, in the current row of the current frame of image, the pixels covered by the ring area above the center of the ring with an inner radius of the first positioning radius and an outer diameter of the second positioning radius are marked as second pixels to be tested; which is equivalent to: taking the initial pixel position in the current row of the current frame of image as the center of the circle, setting a first circle with a first radius as the first positioning radius; at the same time, taking the initial pixel position in the current row of the current frame of image as the center of the circle, setting a second circle with a second radius as the second positioning radius, the first positioning radius is smaller than the second positioning radius; then above the initial pixel position (in the upward direction of the current row), the pixels covered by the ring area enclosed by the second circle and the first circle in the current row of the current frame of image are marked as second pixels to be tested, which are different from the first pixels to be tested.

Then, the average value of the brightness values of the second pixels to be tested is calculated, that is, the ratio of the sum of the brightness values of all the second pixels to be tested in the current row of the current frame of image to the total number of the second pixels to be tested in the current row of the current frame of image is acquired, as the average value of the brightness values of the second pixels to be tested; the ring coverage area enclosed by the first circle and the second circle serves as a transition area for determining the change in light intensity, which depends on the settings of the first positioning radius and the second positioning radius. The first positioning radius is preferably 3, and the second positioning radius is preferably 12. It can be expressed by pixel distance, and the unit is the number of pixels, to form a sufficiently large transition area for determining the change in light intensity.

If the average brightness value of the second pixels to be tested is greater than the brightness value of the pixel at the position of line laser light in the same row found in the previous round, it is determined that the second pixels to be tested are pixels that meet the preset brightness distribution characteristics, and it is determined that the position of line laser light is not in the current row of the current frame of image, then the pixels in the current row of the current frame of image are set as pixels where the positions of line laser light do not exist, and then the pixels in the current row of the current frame of image are excluded from the pixel search range of Step 2, and at the same time, it is determined that the light intensity of the environment in which the robot is located is greater than the first preset light intensity threshold; the position of line laser light in the same row found in the previous round is the position of the convex hull center pixel finally determined in the same row of pixels belonging to the reference frame of image, preferably the initial pixel position in the same row of pixels of the reference frame of image, and the same row of pixels of the reference frame of image is a row with the same row order as the current row of the current frame of image.

In some embodiments, in Step 1, if the initial pixel position cannot be acquired in the current row of the current frame of image, the position of line laser light located in the same row found in the previous round is updated as the initial pixel position, and the second preset pixel distance is updated as the search radius, and Step 2 is repeated. Specifically, the position of line laser light located in the same row found in the previous round is updated as the search center in the current row of the current frame of image, and the second preset pixel distance is set as the search radius, the second preset pixel distance is not equal to the first preset pixel distance, and then starting from the search center set most recently, a search is performed upward along the current row for a pixel within a search radius, and starting from the search center, a search is performed downward along the current row for a pixel within a search radius, and each pixel within the search radius is traversed until the convex hull center pixel in the corresponding row is searched; specifically, it includes that after the convex hull center pixel is selected according to the difference between the brightness values of the pixels searched upward and the brightness values of the pixels searched downward in the search states corresponding to the two search centers determined successively, and the inter-frame matching relationship formed by the same type of values of the current frame of image in the same row of the pixel relative to the reference frame of image, an adjacent pixel searched upward or downward from the search center along the current row is updated as the search center, and Step 2 is re-executed to acquire a new convex hull center pixel and update the new convex hull center pixel as the convex hull center pixel, each of the search centers is within the coverage area of a search radius relative to the initial pixel position, a second preset pixel distance is set as the search radius, preferably, the second preset pixel distance is not equal to the first preset pixel distance; then whenever the search center in the current row is updated once, the convex hull center pixel set in the current row is also updated once; the position of line laser light located in the same row found in the previous round is the position of the convex hull center pixel finally determined in the same row of pixels belonging to the reference frame of image. In addition, if the robot cannot find the central pixel of the convex hull in the same row (the current row of the current frame of image) while repeatedly executing Step 2, it is determined that the robot cannot find the position of the line laser light in the same row, and then the pixels in the current row of the current frame of image are excluded from the pixel search range of Step 2. At the same time, it is determined that the light intensity of the environment in the current row of the current frame of image is so large that the reflection position of the line laser light on the object to be detected cannot be identified.

In summary, when the robot detects that the current frame of image captured by the camera is a frame of bright image, it chooses to input the current frame of image into the processing rule model corresponding to the inter-frame tracking algorithm to output a valid laser position, and effectively selects various ambient light interferences in scenes where the camera is not too close to obstacles, reducing dependence on infrared filters; specifically, in the pixels that meet the convex hull characteristics, based on the numerical relationship between the brightness value gradient generated in the upward searched pixels and the brightness value gradient generated in the downward searched pixels, and the difference between the search states corresponding to the search centers determined successively for two times, the relationship between the brightness value of the currently searched pixel and the brightness value of the convex hull center pixel determined in the same row of the same frame of image last time, and the inter-frame matching relationship formed by the same type of numerical values in the same row of the current frame of image relative to the reference frame of image, it selects the convex hull center pixel of the current row, and traverses each pixel within the search radius relative to the initial pixel position in the current row and update the convex hull center pixel, and excludes the interference of pixels where the positions of line laser light do not exist, and determines the final convex hull pixel of the current row. It can reduce the misjudgment of interference points under strong ambient light conditions, thereby searching for a more accurate convex hull center pixel by tracking the number and brightness values of pixels that meet the convex hull characteristics of the reference frame of image, and then after eliminating all interference points, the coordinates of the remaining convex hull center pixels are set as the positioning coordinates of the line laser light emitted from the line laser transmitter in the current frame of image, so as to more accurately realize the robot's tracking of the reflected light of the laser light reflected from the obstacle surface, which is suitable for robot navigation walking scenes to achieve the effect of robot identifying the positions of the obstacles.

As an embodiment, in order to find the position of the line laser light in the frame of dark image to overcome the problem of the scenes that the inter-frame tracking algorithm cannot cope with and ensure the obstacle avoidance effect, it is necessary to switch to executing the brightness centroid algorithm after the frame of dark image is captured, and allow the previous frame of image (belonging to the frame of bright image, corresponding to the frame of bright image of the line laser light emitted from the line laser transmitter reflected back from the surface of the object to be detected) for use by the brightness centroid algorithm, so as to achieve the effect of complementary advantages with the inter-frame tracking algorithm, which can not only overcome the interference of ambient light, but also continuously track the reflection position of the line laser light.

Specifically, the method in which the robot extracts the position of line laser light from the current frame of image by executing the brightness centroid algorithm includes: the robot traverses the current frame of image row by row, the current frame of image is a frame of dark image and is configured to be divided by rows, then the brightness values of the pixels in each row can be taken out in order by row sorting and the number of pixels in a certain search area can be counted, so as to select the position of line laser light of the predicted reflection position of the line laser light, which may be different from the properties of the aforementioned convex hull center pixel, including the brightness value and the ordinate position. Since it is a frame of dark image, the brightness value of the pixel is not large, so the initial pixel position disclosed in the aforementioned embodiment cannot be captured.

The robot searches for each pixel of the current row in sequence. Specifically, starting from the pixels in the top line of the current row, it traverses to the pixels in the bottom line of the current row in sequence; or starting from the pixels in the bottom line of the current row, it traverses to the pixels in the top line of the current row in sequence, so as to complete the search of each pixel in the same line, the detection of the brightness value and the counting of the number of pixels; in the process of searching the pixels in the current row, according to the numerical relationship between the brightness values of the pixels currently being searched in the current row of the current frame of image and the brightness values of the pixels at the corresponding positions of the previous frame of bright image and according to the brightness values of the pixels at the corresponding positions of the previous frame of bright image, appropriate pixels are selected from the current row of the current frame of image, the coordinate positions of the pixels at the corresponding positions of the previous frame of bright image is same as the coordinate positions of the pixels currently being searched in the current frame of image, which are same at least in the relative position relationship formed with respect to the origin of the coordinate system, and the numerical relationship described in this embodiment is determined by setting a threshold value. Then, in the current row of the current frame of image, at least two appropriate pixels that are adjacent in position are connected to form a positioning line segment; after all the appropriate pixels that are adjacent in position are connected, the positioning line segment with the longest length is selected, after all the appropriate pixels that are adjacent in position are connected, multiple positioning line segments are formed, each positioning line segment is formed by connecting appropriate pixels that are continuously arranged in pixel positions in the same row in sequence, and then the positioning line segments are selected for length comparison to acquire the positioning line segment with the longest length, because the difference between the brightness value of each appropriate pixel and the brightness value of the pixel at the same position of the previous frame of bright image is controlled within a reasonable threshold range, and the brightness value of the pixel at the same position of the previous frame of bright image is controlled within a certain brightness value range to prevent strong light interference, then the brightness values of the continuously arranged appropriate pixels can predict the approximate range of the reflection position of the line laser light reflected from the surface of the object to be detected, which enhances the anti-interference ability against ambient light. The positioning line segment with the longest length is preferably a straight line segment and is parallel to the longitudinal axis of the image coordinate system; preferably, the selected positioning line segment with the longest length is set as the predicted laser light segment, and then the coordinates of the pixel at the center of the predicted laser light segment are set as the positioning coordinates of the line laser light emitted from the line laser transmitter in the current frame of image. If the length of the selected positioning line segment with the largest length is greater than the preset continuous length threshold, the center of the selected positioning line segment with the largest length is set as the position of line laser light, which is equivalent to the convex hull center mentioned in the aforementioned embodiment of executing the inter-frame tracking algorithm to improve the accuracy of obstacle detection.

It should be added that the coordinates of a position of line laser light are represented by the corresponding positioning coordinates. For the current frame of image, the position of line laser light on the corresponding row is acquired by traversing row by row. Therefore, after determining the row number of the current traversal, only the ordinate value may be selected to represent the coordinates of each position of line laser light to identify the height information of the reflection position of the line laser light on the obstacle surface, which can also be used for robot obstacle avoidance.

On the basis of the above-mentioned embodiment, the method for selecting appropriate pixels from the current row of the current frame of image according to the numerical relationship between the brightness values of the pixels currently searched in the current frame of image and the brightness values of the pixels at the corresponding positions of the previous frame of bright image and according to the brightness values of the pixels at the corresponding positions of the previous frame of bright image includes: subtracting the brightness value of the pixel at the same row and line position of the previous frame of bright image from the brightness value of the pixel currently searched in the current frame of image to acquire a relative difference of frame of dark image; when it is detected that the opposite number of the relative difference of frame of dark image is greater than a preset brightness difference threshold, and the brightness of the pixel at the same row and line position of the previous frame of bright image is greater than the brightness threshold of the reference frame of bright image, the pixels currently being searched in the current frame of image are set as appropriate pixels, as the appropriate pixels selected from the current row of the current frame of image, indicating that the pixels in the current frame of image are not disturbed by strong ambient light; the preset brightness difference threshold is an empirical value set based on the difference in brightness values of the pixels at the same position in two adjacent frames of image so that the pixel information captured by the current frame of image is less disturbed by the ambient light intensity; and the brightness threshold of the reference frame of bright image is an empirical value set based on the brightness value of the pixel in the frame of bright image so that the pixel in the frame of bright image is less disturbed by the ambient light intensity.

In summary, when the robot detects that the current frame of image captured by the camera is a frame of dark image, it chooses to input the current frame of image into the processing rule model corresponding to the brightness centroid algorithm to output a positioning line segment with a reasonable length. In the scene where the camera is too close to the obstacle, it overcomes the problem of being sensitive to ambient light interference. Correspondingly, it prevents the robot from colliding with the obstacle in front that reflects laser light due to misjudgment. Therefore, the present application combines the inter-frame tracking algorithm and the brightness centroid algorithm to take advantage of each other in various ambient light intensity scenes, and realizes laser positioning in the frames of bright image and frames of dark image that are alternately generated to reflect the reflected light of the line laser light.

In some embodiments, the method of selecting appropriate pixels from the current row of the current frame of image based on the numerical relationship between the brightness values of the pixels currently searched in the current frame of image and the brightness values of the pixels at the corresponding positions of the previous frame of bright image and according to the brightness values of the pixels at the corresponding positions of the previous frame of bright image may also be described as: subtracting the brightness value of the pixel with the same row and line position in the current frame of image from the brightness value of the pixel currently traversed in the previous frame of bright image to acquire a relative difference of frame of dark image; when it is detected that the relative difference of frame of dark image is greater than a preset brightness difference threshold, and the brightness values of the pixels currently traversed in the previous frame of bright image are greater than the brightness threshold of the reference frame of bright image, the pixels with the same row and line positions in the current frame of image are set as the appropriate pixels, as the appropriate pixels selected from the current frame of image, indicating that the current frame of dark image is not disturbed by strong ambient light. It should be added that the image sequence formed by the reflected light of the line laser light emitted from the line laser transmitter that is reflected from the surface of the object to be detected in the imaging plane of the camera is configured to generate frames of bright image and frames of dark image alternately in sequence, so that: when the current frame of image captured by the camera is a frame of bright image, the next frame of image captured by the camera is a frame of dark image; within the time interval between the camera capturing the current frame of bright image and the camera capturing the next frame of bright image, the camera captures the current frame of dark image; after the camera captures the next frame of bright image, the camera captures the next frame of dark image.

As an embodiment, the laser positioning method further includes adjusting exposure information of the camera, specifically including:

When the robot detects that the light intensity of its environment is greater than the first preset light intensity threshold, it means that the robot detects that the intensity of visible light in the current environment is relatively large and the exposure of the camera becomes relatively large. The robot then reduces the gain of the camera (image signal amplification parameter) to acquire a first gain, so that the image of the reflected light of the line laser light reflected from the surface of the object to be detected and captured by the camera is not overexposed, especially the image information of the visible light part is not easy to be overexposed, so as to improve the accuracy of extracting the position of the aforementioned line laser light in scenes with strong ambient light; the first preset light intensity threshold is mainly a strong light threshold set according to the degree of overexposure of the image captured by the camera due to the strong visible light in the environment.

When the robot detects that the light intensity of its environment is greater than the first preset light intensity threshold, it means that the robot detects that the intensity of visible light in the current environment is large and the exposure of the camera becomes large, then the robot reduces the exposure time of the camera to acquire the first exposure time, so that the image, captured by the camera, of the reflected light of the line laser light reflected from the surface of the object to be detected is not overexposed, especially the image information of the visible light part is not easy to be overexposed, so as to improve the accuracy of extracting the position of the aforementioned line laser light in the scenes with strong ambient light; the first preset light intensity threshold is mainly a strong light threshold set according to the degree of overexposure of the image captured by the camera due to the strong visible light in the environment.

When the robot detects that the light intensity of its environment is less than the second preset light intensity threshold, it means that the robot detects that the intensity of visible light in the current environment is small and the exposure of the camera becomes relatively small, then the robot increases the gain of the camera (image signal amplification parameter) to acquire a second gain, so that the image, captured by the camera, of the reflected light of the line laser light reflected from the surface of the object to be detected is not underexposed (too dark). Preferably, the first gain is less than the second gain; but if the gain before adjusting the first gain in the aforementioned embodiment is already very large to cope with the light intensity of the environment, then the first gain is not necessarily less than the second gain; thereby improving the accuracy of extracting the aforementioned position of line laser light in a scene with weak ambient light; the second preset light intensity threshold is mainly a strong light threshold set according to the exposure degree of the image captured by the camera due to the darker visible light in the environment, and the second preset light intensity threshold is much smaller than the first preset light intensity threshold.

When the robot detects that the light intensity of its environment is less than the second preset light intensity threshold, it means that the robot detects that the intensity of visible light in the current environment is small and the exposure of the camera becomes small, then the robot increases the exposure time of the camera to acquire a second exposure time, so that the image, captured by the camera, of the reflected light of the line laser light reflected from the surface of the object to be detected is not underexposed. Preferably, the first exposure time is less than the second exposure time; but if the exposure time before the first exposure time adjusted in the aforementioned embodiment is very large to cope with the light intensity of the environment, then the first exposure time is not necessarily less than the second exposure time.

Therefore, this embodiment adjusts the gain and exposure time of the camera according to the current environmental conditions, so that the image captured by the camera is not overexposed or underexposed, thereby realizing dynamic exposure adjustment of the camera.

It should be added that the camera gain should be adjusted within a reasonable range to avoid noise; noise generally refers to the camera gain being adjusted too high in a low exposure environment.

As an embodiment, when the exposure information of the camera is used to adjust the power level of the line laser transmitter, the following situations exist.

When the robot detects that the current exposure value of the camera is greater than the first preset exposure threshold, the power level of the line laser transmitter for emitting the line laser light is increased so that the intensity of the line laser light emitted from the line laser transmitter is configured to be equal to the product of the smoothing coefficient and the current exposure value.

In preferred example 1, the current exposure value of the camera includes the third gain and/or the third exposure time. When the light intensity of the environment in which the robot is located is greater, the third gain and/or the third exposure time are adjusted to be greater to adapt to the exposure amount of the current ambient light intensity. At this time, the smoothing coefficient is set to a reasonable value to smooth the step size of the exposure value adjustment, thereby suppressing overexposure.

In preferred example 2, the current exposure value of the camera includes the first gain and/or the first exposure time. Then, when the light intensity of the environment in which the robot is located is greater, the first gain and/or the first exposure time adjusted according to the above embodiment become smaller. At this time, the smoothing coefficient is set to a reasonable value for smoothing the step size of the exposure value adjustment. When the first gain and/or the first exposure time become smaller, the intensity of the line laser light emitted from the line laser transmitter can be suppressed to become smaller to adapt to the exposure amount of the current ambient light intensity.

On the basis of the above-mentioned preferred example 1 or preferred example 2, the power level of the line laser transmitter for emitting the line laser light is automatically adjusted until the intensity of the line laser light emitted from the line laser transmitter (the emission power of the line laser transmitter) is equal to the product of the smoothing coefficient and the current exposure value, thereby achieving the use of a stronger line laser level in a high-brightness environment, and also avoiding a more drastic change in the current exposure value and avoiding overexposure of the image of the reflected light of the line laser light emitted from the line laser transmitter on the surface of the object to be detected that is captured by the camera, so that the robot can accurately search for the position of the line laser light from the current frame of image according to the inter-frame tracking algorithm disclosed in the above-mentioned embodiment, at least ensuring that the brightness values of the pixels and the gradient value between two pixels are within a reasonable range, and the image of the reflected light of the line laser light reflected from the surface of the obstacle can also be captured by the camera when the ambient light is bright.

When the robot detects that the current exposure value of the camera is less than the second preset exposure threshold, the power level of the line laser transmitter for emitting the line laser light is lowered so that the intensity of the line laser light emitted from the line laser transmitter is configured to be equal to the product of the smoothing coefficient and the current exposure value. The first preset exposure threshold is greater than the second preset exposure threshold to reflect that the current ambient light is relatively dark.

In preferred example 3, the current exposure value of the camera includes the fourth gain and/or the fourth exposure time; when the light intensity of the environment in which the robot is located is smaller, the pre-adjusted third gain and/or the third exposure time will be reduced to adapt to the exposure required for the current ambient light intensity. At this time, the smoothing coefficient is set to a reasonable value to smooth the step size of the exposure value adjustment, thereby suppressing underexposure.

In preferred example 4, the current exposure value of the camera includes the second gain and/or the second exposure time; when the light intensity of the environment in which the robot is located is smaller, the second gain and/or the second exposure time adjusted according to the above embodiment become larger. At this time, the smoothing coefficient is set to a reasonable value for smoothing the step size of the exposure value adjustment, which can suppress the intensity of the line laser light emitted from the line laser transmitter from becoming larger when the second gain and/or the second exposure time become larger, so as to adapt to the exposure amount of the current ambient light intensity.

On the basis of the above-mentioned preferred example 3 or preferred example 4, the power level of the line laser transmitter for emitting the line laser light is automatically adjusted until the intensity of the line laser light emitted from the line laser transmitter (the emission power of the line laser transmitter) is equal to the product of the smoothing coefficient and the current exposure value, so as to avoid the current exposure value from changing more drastically and avoid the image, captured by the camera, of the reflected light of the line laser light emitted from the line laser transmitter that is reflected back from the surface of the object to be detected from being underexposed, so that the robot can accurately search for the position of line laser light from the current frame of image in a darker environment, so that the image of the obstacle captured by the camera under dark ambient light is not overexposed so strongly, thereby not generating more reflection interference, and facilitating the use of the laser positioning method to find a more accurate position of line laser light.

Preferably, the current exposure value of the camera is used to reflect the exposure of the camera in an environment with a current light brightness; the current exposure value of the camera may be a positive reflection of the intensity of the ambient light; it may also be a negative reflection of the intensity of the current ambient light. For example, the smaller the current exposure value of the camera is adjusted, the stronger the current ambient light is, which will guide the line laser transmitter to increase the power level for emitting the line laser light, so that even when the ambient light is brighter, the reflected light of the line laser light reflected from the surface of the obstacle can be captured.

In summary, the intensity of the line laser light emitted from the line laser transmitter can describe the mapping relationship between the power level of the line laser transmitter for emitting the line laser light and the current exposure value, and in conjunction with the adjustment effect of the smoothing coefficient, it is adapted to the acquisition of image data of the reflected light of the line laser light by the structured-light module under a series of different exposures, so that according to the adjusted camera gain and exposure time, the power level of the line laser transmitter for emitting the line laser light is adjusted to achieve the use of a stronger line laser emission power level in a high-brightness environment, so that the line laser light on the obstacle can also be seen when the ambient light is bright, and the image will not be overexposed (for example, in strong outdoor ambient light, after the line laser light is reflected back to the camera by a white obstacle, the camera gain or exposure time is reduced), avoiding overexposure of the image captured by the camera due to the overbright environment, thereby finding a more accurate position of line laser light; using a weaker line laser emission power level in a low-brightness environment makes the obstacle image less overexposed when the ambient light is darker, thereby not generating more reflection interference, and facilitating a more accurate position of line laser light (corresponding to the convex hull center).

Based on the various embodiments of the aforementioned laser positioning method, the present application further discloses a robot, the body of which is equipped with a structured-light module. The structured-light module includes a line laser transmitter and a camera without an infrared filter. The camera is configured to receive light of various wavelengths of the line laser light emitted from the line laser transmitter without a filter (such as an infrared filter) on the lens, so that the imaging information of the infrared light and the imaging information of the visible light are retained in the image captured by the camera. A controller is arranged inside the robot, and the controller is electrically connected to the structured-light module. The controller is configured to execute the laser positioning method to acquire the positioning coordinates of the line laser light emitted from the line laser transmitter in the current frame of image, that is, to acquire the position of line laser light in the frame of bright image and the position of line laser light in the frame of dark image; the line laser light emitted from the line laser transmitter is within the field of view of the camera.

In this embodiment, the controller can control the line laser transmitter and the camera to work. Optionally, the controller can control the exposure of the camera, and also can control the line laser transmitter to emit line laser light to the outside during the exposure period of the camera, so that the camera can capture the environment image detected by the line laser light. The controller can control the camera and the line laser transmitter to work simultaneously or alternately, and there is no limitation on this. It should be noted that the laser light reflected by the photographic object (the surface of the object to be detected) is projected onto the photosensitive film through the camera lens, causing it to undergo chemical changes and produce an image. This process is called exposure.

Preferably, the controller may have an image processing hardware device having FPGA and DSP. To achieve faster processing speed, considering that FPGA has obvious advantages in processing streaming parallel computing, some operations involving morphological image processing are performed in FPGA, and the rest are performed in DSP. Even if the image resolution is increased, it does not take more time to process. When the image size is 2048*2048 pixels, the processing speed of the image processing system can reach 6 frames/s, which can simultaneously meet the accuracy and real-time requirements of the robot's obstacle avoidance.

In some embodiments, the horizontal viewing angle of the camera is configured to receive reflected light of the line laser light reflected back from a space within the width of the robot in front of the robot to acquire an image of the environment detected by the line laser light. In order to acquire the corresponding horizontal viewing angle of the camera, a wide-angle lens or a non-wide-angle lens can be used. The specific use depends on the width of the robot body. It is only necessary to capture the line laser light within the entire robot body.

Additionally or alternatively, the installation height of the structured-light module on the body of the robot is configured to be in proportion with the height of the obstacle to be detected, so that the obstacle to be detected occupies the effective field of view of the camera. The installation heights of the line laser transmitter and the camera depend on the size of the obstacle to be detected. The greater the installation height of the structured-light module on the robot body, the larger the longitudinal space that can be covered, but it deviates farther from the small obstacles to be detected, so fewer local details are captured, which reduces the detection accuracy of small obstacles to be detected; the smaller the installation height of the structured-light module on the robot body, the smaller the longitudinal space that can be covered, but it is closer to the small obstacles to be detected, so more local details of the obstacles are captured, which improves the detection accuracy of small obstacles to be detected.

As for the installation height, at the installation height of the structured-light module, the line laser transmitter and the camera may be located at different heights. For example, on the top of the robot, the line laser transmitter is higher than the camera; or, the camera is higher than the line laser transmitter; of course, the line laser transmitter and the camera may be located at the same height. In actual use, the structured-light module will be installed on a self-propelled robot (such as a sweeping robot, patrol robot and other autonomous mobile devices). In this case, the distances from the line laser transmitter and the camera to the working surface of the robot (such as the ground) are different. For example, the distance from the camera to the working surface is 32 mm, and the distance from the line laser transmitter to the working surface is 47 mm.

As an embodiment, the coverage range of the upper viewing angle of the camera is configured to cover the bottom of the plane formed by the line laser light emitted from the line laser transmitter, specifically, a laser plane composed of multiple beams of line laser light, which extends and spreads along the emission direction of the line laser transmitter and shoots to the ground where the robot is traveling. Preferably, the angle between the laser plane and the working surface of the robot is 15 degrees. The coverage range of the lower viewing angle of the camera is configured to cover the reflected light of the line laser light emitted from the line laser transmitter reflected from the surface of the obstacle in front of the robot's body. Therefore, the pitch angle of the camera can be appropriately adjusted according to the requirements of the map image required for navigation. The lower viewing angle of the camera is the angle formed by detecting from top to bottom, forming the camera's top viewing angle; the upper viewing angle of the camera is the angle formed by detecting from bottom to top, forming the camera's bottom viewing angle. The pitch angle of the camera is divided into the lower viewing angle of the camera and the upper viewing angle of the camera. Preferably, the upper viewing angle of the camera is set to 24 degrees, and the lower viewing angle of the camera is set to 18 degrees.

Additionally or alternatively, the heading angle formed by the deflection of the camera (optical axis of the lens) relative to the central axis of the robot is maintained within a preset error angle range, so that the optical axis of the camera is parallel to the travel direction of the robot, and the camera receives the reflected light of the line laser light reflected back from a space within the width of the robot in front of the robot, so as to detect obstacles directly in front of the robot in real time while the robot is walking.

Additionally or alternatively, the roll angle of the camera generated by the rotation of its optical axis is maintained within a preset error angle range, so that the camera receives the reflected light of the line laser light reflected back from a space within the width of the robot in front of the robot. The camera is rotatably mounted on the body of the robot, and the preset error angle range is set as -0.01 to 0.01 degrees, so that the heading angle formed by the deflection of the camera (optical axis of the lens) relative to the central axis of the robot is maintained at about 0 degrees, and the roll angle of the camera generated by the rotation of its optical axis is also maintained at about 0 degrees.

After the structured-light module is installed, the angle between the center line of the line laser light emitted from the line laser transmitter and the installation baseline of the line laser transmitter is equivalent to the angle between the laser surface and the working surface of the robot, which is preferably 15 degrees. The installation baseline refers to a straight line where the line laser transmitter is located when the line laser transmitter is located at an installation height above the robot, or a straight line where the line laser transmitter and the camera are located when the line laser transmitter and the camera are located at the same installation height.

In this embodiment, the emission angle of the line laser transmitter is not limited. The emission angle is related to the detection distance that the robot where the structured-light module is located needs to meet, the body width of the robot, and the mechanical distance between the line laser transmitter and the camera. When the detection distance that the robot where the structured-light module is located needs to meet, the body width of the robot, and the mechanical distance between the line laser transmitter and the camera are determined, the emission angle of the line laser transmitter can be directly acquired through the trigonometric function relationship, that is, the emission angle is a fixed value.

Of course, if a specific emission angle is required, it can be achieved by adjusting the detection distance that the robot where the structured-light module is located needs to meet and the mechanical distance between the line laser transmitter and the camera. In some application scenarios, when the detection distance that the robot needs to meet and the body width of the robot are determined, the emission angle of the line laser transmitter can be changed within a certain angle range by adjusting the mechanical distance between the line laser transmitter and the camera.

As an embodiment, if the installation distance between the camera and the line laser module is larger, the coordinate offset of the pixel used to represent the reflection position of the line laser light on the surface of the obstacle relative to the center of the camera in the image captured by the camera increases, the pixel used to represent the reflection position of the line laser light on the surface of the obstacle includes but is not limited to the convex hull center pixel, the pixel conforming to the convex hull characteristic, and the position of line laser light, which are acquired in the aforementioned embodiment. When the robot approaches an obstacle, the greater the installation distance between the camera and the line laser module, the greater the longitudinal jump of the pixels in the image captured by the camera, thereby acquiring more local detail information and improving the detection accuracy of the obstacle.

It should be noted that the installation distance refers to the mechanical distance between the line laser transmitter and the camera (or called the baseline distance). The mechanical distance between the line laser transmitter and the camera can be flexibly set according to the application requirements of the structured-light module. Information such as the mechanical distance between the line laser transmitter and the camera, the detection distance that the robot where the structured-light module is located needs to meet, and the body width of the robot can determine the size of the measurement blind area to a certain extent. For the robot where the structured-light module is located, the body width thereof is fixed, and the measurement range and the mechanical distance between the line laser transmitter and the camera can be flexibly set according to needs, which means that the mechanical distance and blind area range are not fixed values. Under the premise of ensuring the measurement range (or performance) of the robot, the blind area should be minimized as much as possible. However, the greater the mechanical distance between the line laser transmitter and the camera, the larger the controllable distance range, which is conducive to better control of the blind area size to improve the detection accuracy of obstacles.

In some application scenarios, the structured-light module is applied to a sweeping robot. For example, it can be installed on the collision plate of the sweeping robot or on the robot body. For a sweeping robot, the following exemplifies a reasonable mechanical distance range between the linear laser transmitter and the camera. For example, the mechanical distance between the line laser transmitter and the camera may be greater than 20 mm. Further optionally, the mechanical distance between the line laser transmitter and the camera may be greater than 30 mm. Furthermore, the mechanical distance between the line laser transmitter and the camera is greater than 41 mm. It should be noted that the range of mechanical distance here is not only applicable to the scenario where the structured-light module is used in a sweeping robot, but also applicable to the application of the structured-light module in other devices with specifications and dimensions close to or similar to those of the sweeping robot.

As an embodiment, the emission angle of the line laser transmitter and the receiving angle of the camera are set as follows: the line laser transmitter emits the line laser light to a preset detection position in front of the body, and the line laser light is reflected back to the camera at the preset detection position to form the pixel that meets the convex hull characteristic or the convex hull center pixel in the image captured by the camera, the length of the laser light segment formed by the line laser light at the preset detection position is greater than the body width of the robot; the reflection position of the line laser light reflected from the ground depends on the lateral emission angle of the line laser light (i.e., the emission angle of the line laser transmitter) and the lateral pixel viewing angle of the camera (i.e., the receiving angle of the camera, corresponding to the horizontal viewing angle), and the line laser light emitted to the front so that the horizontal length of the line laser extracted by the camera is slightly wider than the body width of the robot.

Whenever the robot travels a preset distance in the direction from the current position to the preset detection position, the horizontal distance between the preset detection position and the robot becomes smaller. In some embodiments, the robot approaches the obstacle at the preset detection position; the coordinate offset of the pixel in the image captured by the camera for representing the same reflection position of the line laser light in the preset detection position relative to the center of the camera increases, that is, the closer the line laser emitted on the ground in front of the machine, the larger the longitudinal jump of the pixel in the image captured by the camera for representing the reflection position of the line laser light at the same travel distance of the robot, the more local information is captured, and the higher the detection accuracy on the obstacle.

In summary, during the travelling process of the robot, when the distance between the obstacle and the camera (or the structured-light module as a whole in combination with the laser emitter) decreases, the vertical coordinate position jump of the pixel used to reflect the same reflection position of the line laser light in the image captured by the camera increases, and the number of pixels used to characterize the same local area of the obstacle increases, so that the gradient value of the brightness between the pixels may decrease, and the number of pixels in the same frame of image may remain unchanged, thereby improving the detection accuracy of the obstacle. The pixels used to reflect the reflection position of the line laser light include pixels that meet the convex hull characteristics. As the robot approaches the obstacle, the positions of the pixels that meet the convex hull characteristics will jump longitudinally (the vertical coordinate changes), so that the obstacle in the image captured by the robot's camera changes from the original overall outline to a local outline, at least the outline height of the obstacle covered in the longitudinal direction changes, then the number of pixels required for the local outline captured before approaching the obstacle will increase, thereby improving the accuracy of obstacle detection. Furthermore, the greater the installation distance between the camera and the line laser transmitter in the robot, for example, the greater the installation height of the line laser transmitter relative to the camera, the greater the change in the vertical coordinate of the pixel used to represent the reflection position of the line laser light on the surface of the obstacle, and the obstacle in the same frame of image captured by the camera changes from the original overall outline to a local outline, then the number of pixels used to characterize the same local area of the obstacle increases compared with the case where the installation height has not become larger, or each time the robot travels a test distance, the number of pixels used to characterize the same local area of the obstacle in the current frame of image captured in real time increases compared with the case where the installation height has not become larger, thereby improving the accuracy of obstacle detection, and the size of obstacles that can be detected by robots can become smaller relative to the prior art.

It should be noted that the pixels that meet the convex hull characteristics are configured to simulate part or all of the point information of the laser light segment formed by the line laser light emitted onto the surface of the object to be detected; the robot sets the group of pixels that meet the convex hull characteristics of the image to the group of the pixels whose brightness values decrease from the center of the convex hull along the current row to the upper and lower sides respectively, and the pixel at the center of the convex hull, and such group of pixels forms a convex hull, the center of the convex hull is the pixel with the largest brightness value in the group of pixels; in the group of pixels that meet the convex hull characteristics, starting from the center of the convex hull, the brightness value decreases upward along the current row to generate the first gradient value, and the brightness value decreases downward along the current row to generate the second gradient value.

The logic and/or steps represented in the flowchart or otherwise described herein, for example, can be considered as an ordered list of executable instructions for implementing logical functions, which can be embodied in any computer-readable medium for use by an instruction execution system, apparatus or device (such as a computer-based system, a system including a processor or other system that can fetch instructions from an instruction execution system, apparatus or device and execute instructions), or used in combination with these instruction execution systems, apparatuses or devices. For the purposes of this specification, a "computer-readable medium" can be any apparatus that can contain, store, communicate, propagate, or transport the program for use by an instruction execution system, apparatus, or device or in conjunction with such instruction execution system, apparatus, or device. More specific examples (a non-exhaustive list) of computer-readable media include the following: an electrical connection (electronic device) having one or more wires, a portable computer disk case (magnetic device), a random access memory (RAM), a read-only memory (ROM), an erasable and programmable read-only memory (EPROM or flash memory), a fiber optic device, and a portable compact disk read-only memory (CDROM). In addition, the computer-readable medium may even be paper or other suitable medium on which the program is printed, since the program may be acquired electronically, for example, by optically scanning the paper or other medium and then editing, interpreting or processing in other suitable ways if necessary, and then stored in a computer memory.

The above embodiments are only for illustrating the technical concept and features of the present application, and their purpose is to enable technicians familiar with the technical field to understand the content of the present application and implement it accordingly, and they cannot be used to limit the protection scope of the present application. All equivalent changes or modifications made according to the spirit and essence of the present application should be included in the protection scope of the present application.

## Claims

1. A laser positioning method based on image information, **characterized in that** the laser positioning method is executed by a robot equipped with a structured-light module, and wherein the structured-light module comprises a line laser transmitter and a camera without an infrared filter, so that an image captured by the camera retains imaging information of infrared light and imaging information of visible light;
the laser positioning method comprises:
controlling, by the robot, the camera to capture one or more frames of image of reflected light of line laser light emitted from the line laser transmitter that is reflected back from a surface of an object to be detected, and detecting whether the one or more frames of image captured by the camera are of a bright type or of a dark type; wherein
when the robot detects that a current frame of image captured by the camera is a frame of bright image, the robot executes an inter-frame tracking algorithm to search for positions of line laser light from the current frame of image, and then sets coordinates of the positions of line laser light as positioning coordinates of the line laser light emitted from the line laser transmitter in the current frame of image;
when the robot detects that the current frame of image captured by the camera is a frame of dark image, the robot executes a brightness centroid algorithm to extract the positions of line laser light from the current frame of image, and then sets the coordinates of the positions of line laser light as the positioning coordinates of the line laser light emitted from the line laser transmitter in the current frame of image.

2. The laser positioning method according to claim 1, **characterized in that** the executing, by the robot, the inter-frame tracking algorithm to search for the positions of line laser light from the current frame of image comprises:
Step 1, traversing, by the robot, pixels of the current frame of image row by row, to acquire an initial pixel position in a corresponding row of pixels of the current frame of image, and to exclude pixels where the positions of line laser light do not exist from the current frame of image according to pixels in the corresponding row that meet preset brightness distribution characteristics, wherein the positions of line laser light are used to indicate reflection positions of the line laser light on the surface of the object to be detected;
Step 2, except for the row comprising the pixels where the positions of line laser light do not exist, setting, by the robot, the initial pixel position in a current row of the current frame of image as a search center, to search pixels within a search radius upward along the current row from the search center, and to search pixels within a search radius downward along the current row from the search center; then, according to differences between brightness values of the pixels searched upward and brightness values of the pixels searched downward under search states corresponding to the two search centers determined successively, and an inter-frame matching relationship formed from same-type numerical values of the pixels in the same current row of the current frame of image relative to a reference frame of image, selecting a new convex hull center pixel in the current row to update a convex hull center pixel determined in the current row of the current frame of image last time; wherein the reference frame of image is configured as a frame of bright image, where the positions of line laser light exist, that the robot has found most recently before the current frame of image is acquired; whenever the search center in the current row is updated once, the convex hull center pixel set in the current row is updated once;
Step 3, according to a numerical relationship between a brightness value in an effective coverage area corresponding to the positioning coordinates of the line laser light emitted from the line laser transmitter in a previous frame of dark image and a brightness value of the convex hull center pixel in the current frame of image, eliminating interference pixels from the selected convex hull center pixels; after the robot traverses the convex hull center pixels in all rows of pixels in the current frame of image to eliminate all interference pixels, the coordinates of remaining ones of the convex hull center pixels are set as the positioning coordinates of the line laser light emitted from the line laser transmitter in the current frame of image, and determining that the robot is to search for the position of line laser light determined in the corresponding row in the current frame of image to form one or more laser light segments from the line laser light emitted from the line laser transmitter on the surface of the object to be detected, and determining that the robot has searched for the positions of line laser light from the current frame of image by executing the inter-frame tracking algorithm;
wherein the position of line laser light determined in a row is a position of the convex hull center pixels last updated in the row after the robot traverses all the pixels in the row, and the coordinates of one of the positions of line laser light are represented by the corresponding positioning coordinates.

3. The laser positioning method according to claim 2, **characterized in that**, in Step 2, every time the convex hull center pixel is selected for the search center, updating an adjacent pixel, which has been searched upward or downward along the current row starting from the search center, as the search center, and repeating Step 2 to acquire the new convex hull center pixel and update the new convex hull center pixel as the convex hull center pixel; each search center is within a coverage area of a search radius relative to the initial pixel position, wherein the search radius is set to a first preset pixel distance; the selected convex hull center pixel is a last updated convex hull center pixel in each row of convex hull center pixels in the current frame of image; the selected convex hull center pixel is closest to an origin of a coordinate system of the current frame of image in each row of convex hull center pixels in the current frame of image;
wherein the robot sets a group of pixels that meet convex hull characteristics in the current row of the current frame of image to a pixel group composed of pixels each has a brightness value decrease respectively in upward and downward directions from a convex hull center along the current row, and the convex hull center pixel, to form a convex hull, the convex hull center is a position where a pixel with a largest brightness value in the pixel group locates, and the convex hull center pixel is set as the pixel at the convex hull center; in the group of the pixels that meet the convex hull characteristics, starting from the convex hull center in the upward direction along a same row, the brightness values of the pixels decrease along the current row, and a first gradient value is generated between the brightness values of two adjacent pixels, and starting from the convex hull center in the downward direction along the same row, the brightness values of the pixels decrease along the current row, and a second gradient value is generated between the brightness values of two adjacent pixels, so that the convex hull center is the search center.

4. The laser positioning method according to claim 3, **characterized in that**, in Step 2, according to the differences between brightness values of the pixels searched upward and brightness values of the pixels searched downward under the search states corresponding to the two search centers determined successively, and the inter-frame matching relationship formed from same-type numerical values of the pixels in the same current row of the current frame of image relative to the reference frame of image, selecting the convex hull center pixel, comprises:
in the current row of the current frame of image, controlling a brightness value of the search center to be compared with the brightness value of the convex hull center pixel located in the same row searched last time; wherein the convex hull center pixel located in the same row searched last time is the selected convex hull center pixel in the same row of the current frame of image for the search center determined last time, the search center determined last time is a pixel adjacent to the currently determined search center downward or upward in the current row of the current frame of image, and a row order of the pixels in the same row of the current frame of image is equal to a row order of the current row of the current frame of image;
if the brightness value of the search center currently determined is greater than the brightness value of the convex hull center pixel located in the same row searched last time, then in the current row of the current frame of image, searching for pixels upward from the search center, and counting the pixels whose brightness values decrease according to the first gradient value until an upward counting stop condition is met, then marking a number of the pixels whose brightness values decrease according to the first gradient value as an upward gradient descent number, and stopping searching for pixels upward until a next update of the search center; and searching for pixels downward from the search center, and counting the pixels whose brightness values decrease according to the second gradient value until a downward counting stop condition is met, then marking a number of the pixels whose brightness values decrease according to the second gradient value as a downward gradient descent number, and stopping searching for pixels downward until the next update of the search center;
when the robot determines that the upward gradient descent number counted in the current row of the current frame of image is greater than or equal to the upward gradient descent number required to be counted for the last search for the convex hull center pixel located in the same row, and/or determines that the downward gradient descent number counted in the current row of the current frame of image is greater than or equal to the downward gradient descent number required to be counted for the last search for the center pixel of the convex hull located in the same row, among the pixels traversed by the robot in the current row of the current frame of image, if the robot detects that the first gradient value and the second gradient value are not equal to a first preset gradient parameter, and an absolute value of a difference between the first gradient value and the second gradient value is less than a second preset gradient parameter, and an absolute value of a difference between a brightness value of a pixel with a smallest brightness value searched upward along the current row and a brightness value of a pixel at the currently determined search center is greater than an absolute value of a difference in brightness values of same type formed by searching upward among the pixels in the same row of the reference frame of image, and an absolute value of a difference between a brightness value of a pixel with a smallest brightness value searched downward along the current row and a brightness value of a pixel at the currently determined search center is greater than an absolute value of a difference in brightness values of same type formed by searching downward among the pixels in the same row of the reference frame of image, then the robot marks the currently determined search center as the convex hull center pixel; wherein the first preset gradient parameter is less than the second preset gradient parameter.

5. The laser positioning method according to claim 4, **characterized in that** the absolute value of the difference in brightness values of same type formed by searching upward among the pixels in the same row of the reference frame of image is an absolute value of a difference between a brightness value of a pixel with a smallest brightness value searched upward in a row with the same row order as the current row in the reference frame of image from the search center finally determined in the row with the same row order as the current row, and a brightness value of the pixel at the search center finally determined in the same row, wherein a distance between the pixel with the smallest brightness value searched upward and the search center finally determined in the same row is less than or equal to the search radius;
the absolute value of the difference in brightness values of same type formed by searching downward among the pixels in the same row of the reference frame of image is an absolute value of a difference between a brightness value of a pixel with a smallest brightness value searched downward along a row with the same row order as the current row from the search center finally determined in the row with the same row order as the current row, and the brightness value of the pixel at the search center finally determined on the same row, wherein a distance between the pixel with the smallest brightness value searched downward and the search center finally determined in the same row is less than or equal to the search radius.

6. The laser positioning method according to claim 4, **characterized in that**, for the currently determined search center, Step 2 further comprises:
if a brightness value of a pixel at the search center is greater than the brightness value of the convex hull center pixel located in the same row that was searched last time, then in the current row of the current frame of image, searching for pixels upward from the search center and searching for pixels downward from the search center;
if the robot detects that the brightness values of the pixels are not decreasing according to the first gradient value during the upward search from the search center, increasing a preset upward gradient abnormality count number by one, and then determining whether all the pixels covered within the search radius along the current row of the current frame of image have been searched upward; if so, the robot stops searching for pixels along the current row of the current frame of image upward and determines that the upward counting stop condition is met; otherwise, when an upward gradient abnormality frequency is greater than a first preset error number, the robot stops searching for pixels along the current row of the current frame of image upward and determines that the upward counting stop condition is met; and, if the robot detects that the brightness values of the pixels are not decreasing according to the second gradient value during the downward search from the search center, counting a preset downward gradient abnormality count number once, and then determining whether all the pixels covered within the search radius along the current row of the current frame of image have been searched downward; if so, the robot stops searching for pixels along the current row of the current frame of image downward and determines that the downward counting stop condition is met; otherwise, when an upward gradient abnormality frequency is greater than a second preset error number, the robot stops searching for pixels along the current row of the current frame of image downward and determines that the downward counting stop condition is met; or
during the upward search from the search center, counting, by the robot, the pixels whose brightness value is 255 and whose positions are adjacent to each other upward along the current row of the current frame of image, and marking a number of the pixels whose brightness value is 255 and whose positions are adjacent to each other as an upward overexposure number; when the robot detects that the upward overexposure number is greater than a third preset error number, and/or the pixels covered within the search radius are counted upward along the current row of the current frame of image, stopping, by the robot, searching for pixels upward along the current row of the current frame of image and determining that the upward counting stop condition is met; and during the downward search from the search center, counting, by the robot, the pixels whose brightness value is 255 and whose positions are adjacent to each other downward along the current row of the current frame of image, and marking a number of pixels whose brightness value is 255 and whose positions are adjacent to each other as a downward overexposure number; when the robot detects that the downward overexposure number is greater than a fourth preset error number, and/or the pixels covered within the search radius are counted downward along the current row of the current frame of image, stopping, by the robot, searching for pixels downward along the current row of the current frame of image and determining that the downward counting stop condition is met.

7. The laser positioning method according to claim 3, **characterized in that**, in Step 3, according to the numerical relationship between the brightness value in the effective coverage area corresponding to the positioning coordinates of the line laser light emitted from the line laser transmitter in the previous frame of dark image and the brightness value of the convex hull center pixel in the current frame of image, eliminating interference pixels from the selected convex hull center pixels, comprises:
after the robot traverses all the rows of the current frame of image and acquires a latest convex hull center pixel in each row, and saves the positioning coordinates of the line laser light emitted from the line laser transmitter in the previous dark image, for each convex hull center pixel in the current frame of image, within a circular area with the positioning coordinates of the line laser light emitted from the line laser transmitter in the previous dark image as a center and a detection pixel distance as a radius, if the robot determines that there is at least one pixel in the circular area whose brightness value is greater than the brightness value of the convex hull center pixel with same coordinates as the center in the current frame of image by a preset ambient light brightness threshold, determining, by the robot, that the convex hull center pixel with the same coordinates as the center in the current frame of image is the interference pixel, at which the robot cannot find the position of line laser light, and eliminating the interference point from the current frame of image.

8. The laser positioning method according to claim 2, **characterized in that**, in Step 1, excluding the pixels where the positions of line laser light do not exist from the current frame of image according to the pixels in the corresponding row that meet the preset brightness distribution characteristics, comprises:
if a brightness value of the initial pixel position in the current row of the current frame of image is greater than a brightness value of the pixel at the position of line laser light found in a previous round and located in the same row by a first preset brightness threshold, or a brightness value of the initial pixel position in the current row of the current frame of image is greater than a brightness value of the pixel at the position of line laser light found in the previous round and located in the same row by a second preset brightness threshold, then starting from a position which is at a reference pixel distance upward from the initial pixel position in the current row of the current frame of image along the current row of the current frame of image, searching for pixels downward along the current row of the current frame of image; if a brightness value of a pixel currently searched is detected to be greater than the brightness value of the pixel at the position of line laser light found in the previous round and located in the same row by the first preset brightness threshold, or when the brightness value of a pixel currently searched is detected to be equal to 255, counting an error position count number once, and determining that the pixel currently searched meets the preset brightness distribution characteristics; when the robot detects that the error position count number is greater than a reference pixel count threshold, determining that the positions of line laser light are not in the current row of the current frame of image, then setting the pixels in the current row of the current frame of image as the pixels where the positions of line laser light do not exist, and then excluding the pixels in the current row of the current frame of image from a pixel search range of Step 2, and determining that a light intensity of environment where the robot is located is greater than a first preset light intensity threshold;
wherein the reference pixel distance is represented by a number of pixels, so that the reference pixel count threshold is equal to the reference pixel distance;
wherein the position of line laser light located in the same row found in the previous round is the position of the convex hull center pixel finally determined in the same row of pixels belonging to the reference frame of image.

9. The laser positioning method according to claim 2, **characterized in that**, in Step 1, excluding the pixels where the positions of line laser light do not exist from the current frame of image according to the pixels in the corresponding row that meet the preset brightness distribution characteristics, comprises:
taking the initial pixel position in the current row of the current frame of image as a center of a ring, marking, in the current row of the current frame of image, the pixels covered by a ring area whose inner radius is a first positioning radius and whose outer radius is a second positioning radius and located below the center of the ring as first pixels to be tested, and calculating an average brightness value of the first pixels to be tested, and if the average brightness value of the first pixels to be tested is greater than the brightness value of the pixel at the position of line laser light located in the same row found in the previous round, determining that the first pixels to be tested meet the preset brightness distribution characteristics, and determining that the positions of line laser light are not in the current row of the current frame of image, then setting the pixels in the current row of the current frame of image as the pixels where the positions of line laser light do not exist, and then excluding the pixels in the current row of the current frame of image from a pixel search range of Step 2, and determining that a light intensity of environment where the robot is located is greater than a first preset light intensity threshold; wherein the first positioning radius is smaller than the second positioning radius, and the position of line laser light located in the same row found in the previous round is the position of the convex hull center pixel finally determined in the same row of pixels belonging to the reference frame of image; or
taking the initial pixel position in the current row of the current frame of image as a center of a ring, marking, in the current row of the current frame of image, the pixels covered by a ring area whose inner radius is the first positioning radius and whose outer radius is the second positioning radius and located above the center of the ring as second pixels to be tested, and calculating an average brightness value of the second pixels to be tested, and if the average brightness value of the second pixels to be tested is greater than the brightness value of the pixel at the position of line laser light located in the same row found in the previous round, determining that the second pixels to be tested meet the preset brightness distribution characteristics, and determining that the positions of line laser light are not in the current row of the current frame of image, then setting the pixels in the current row of the current frame of image as the pixels where the position of line laser light do not exist, and then excluding the pixels in the current row of the current frame of image from a pixel search range of Step 2, and determining that a light intensity of environment where the robot is located is greater than a first preset light intensity threshold; wherein the first positioning radius is smaller than the second positioning radius, and the position of line laser light located in the same row found in the previous round is the position of the convex hull center pixel finally determined in the same row of pixels belonging to the reference frame of image.

10. The laser positioning method according to claim 3, **characterized in that** the initial pixel positions of the traversed rows are positions of original pixels in the image captured by the camera after the line laser light emitted from the line laser transmitter is reflected back to a field of view of the camera from a travel plane of the robot when there is no obstacle in front of the robot;
each of the original pixels corresponds to a reflection position on the travel plane of the robot, and is used to represent a starting point for searching the position of line laser light in each row of the same frame of image;
the reference frame of image is configured as a frame of bright image where the position of line laser light is found by the robot most recently before the current frame of image, wherein the position of line laser light found by the robot most recently is derived from the convex hull center pixel set in the corresponding row of the reference frame of image.

11. The laser positioning method according to claim 10, **characterized in that**, in Step 1, if the initial pixel position cannot be acquired in the current row of the current frame of image, the position of line laser light located in the same row found in the previous round is updated as the initial pixel position, and a second preset pixel distance is updated as the search radius, and Step 2 is repeated to search for the convex hull center pixel in the corresponding row; wherein the position of line laser light located in the same row found in the previous round is the position of the convex hull center pixel finally determined in the same row of pixels belonging to the reference frame of image or the initial pixel position in the same row of pixels of the first frame of bright image;
if the robot cannot find the convex hull center pixel in the same row while repeatedly executing Step 2, it is determined that the robot cannot find the position of line laser light in the same row.

12. The laser positioning method according to claim 1, **characterized in that** the executing, by the robot, the brightness centroid algorithm to extract the positions of line laser light from the current frame of image comprises:
traversing, by the robot, the pixels of the current frame of image row by row;
searching, by the robot, each pixel in a current row in sequence, to select appropriate pixels from the current row of the current frame of image according to a numerical relationship between a brightness value of a currently searched pixel in the current row of the current frame of image and a brightness value of a pixel at a corresponding position of a previous frame of bright image and according to the brightness value of the pixel at the corresponding position of the previous frame of bright image;
then, in the current row of the current frame of image, connecting at least two of the appropriate pixels that are adjacent in position to form a positioning line segment; after all the appropriate pixels that are adjacent in position are connected, selecting one of the positioning line segments with a largest length;
if the length of the selected positioning line segment with the largest length is greater than a preset continuous length threshold, selecting a center of the selected positioning line segment with the largest length as the position of line laser light.

13. The laser positioning method according to claim 12, **characterized in that**, selecting the appropriate pixels from the current row of the current frame of image according to the numerical relationship between the brightness value of the currently searched pixel in the current row of the current frame of image and the brightness value of a pixel at the corresponding position of the previous frame of bright image and according to the brightness value of the pixel at the corresponding position of the previous frame of bright image comprises:
subtracting the brightness value of the pixel currently searched in the current frame of image from the brightness value of the pixel at a same row and line position in the previous frame of bright image to acquire a relative difference of frame of dark image; when it is detected that an opposite number of the relative difference of frame of dark image is greater than a preset brightness difference threshold, and a brightness value of a pixel at the same row and line position in the previous frame of bright image is greater than a reference frame of bright image brightness threshold, setting the pixel currently searched in the current frame of image as the appropriate pixel.

14. The laser positioning method according to any one of claims 1 to 13, **characterized in that** an image sequence, captured by the camera and formed by the reflected light of the line laser light emitted from the line laser transmitter that is reflected back from the surface of the object to be detected is configured to generate the frames of image comprised of frames of bright image and frames of dark image alternately in sequence, so that: when the current frame of image captured by the camera is a frame of bright image, a next frame of image captured by the camera is a frame of dark image; within a time interval between the camera capturing the current frame of bright image and the camera capturing a next frame of bright image, the camera captures the current frame of dark image; after the camera captures the next frame of bright image, the camera captures a next frame of dark image;
wherein, during the execution of the laser positioning method, a first frame of image of the image sequence is a frame of bright image.

15. The laser positioning method according to any one of claims 1 to 13, **characterized in that** the laser positioning method further comprises:
when the robot detects that a light intensity of environment where the robot is located is greater than a first preset light intensity threshold, reducing, by the robot, a gain of the camera so that each frame of image, captured by the camera, of the reflected light of the line laser light that is reflected form the surface of the object to be detected is not overexposed;
when the robot detects that the light intensity of environment where the robot is located is greater than the first preset light intensity threshold, reducing, by the robot, exposure time of the camera so that each frame of image, captured by the camera, of the reflected light of the line laser light that is reflected from the surface of the object to be detected is not overexposed;
when the robot detects that the light intensity of environment where the robot is located is less than a second preset light intensity threshold, increasing, by the robot, the gain of the camera so that each frame of image, captured by the camera, of the reflected light of the line laser light that is reflected from the surface of the object to be detected is not underexposed;
when the robot detects that the light intensity of environment where the robot is located is less than the second preset light intensity threshold, increasing, by the robot, the exposure time of the camera so that each frame of image, captured by the camera, of the reflected light of the line laser light that is reflected from the surface of the object to be detected is not underexposed.

16. The laser positioning method according to any one of claims 1 to 13, **characterized in that**, when the robot detects that a current exposure value of the camera is greater than a first preset exposure threshold, a power level of the line laser transmitter for emitting the line laser light is increased so that an intensity of the line laser light emitted from the line laser transmitter is configured to be equal to a product of a smoothing coefficient and the current exposure value;
when the robot detects that the current exposure value of the camera is less than a second preset exposure threshold, the power level of the line laser transmitter for emitting the line laser light is lowered so that the intensity of the line laser light emitted from the line laser transmitter is configured to be equal to the product of the smoothing coefficient and the current exposure value;
wherein the first preset exposure threshold is greater than the second preset exposure threshold, and the current exposure value of the camera is used to reflect exposure amount of the camera in an environment with current light brightness; the smoothing coefficient is used to smooth a step size of an exposure value adjustment, so that the robot can search for the position of line laser light from the current frame of image.

17. A robot, **characterized in that** a body of the robot is equipped with a structured-light module comprising a line laser transmitter and a camera without an infrared filter, so that an image captured by the camera retains imaging information of infrared light and imaging information of visible light;
wherein a controller is provided inside the robot, the controller is electrically connected to the structured-light module, and the controller is configured to execute the laser positioning method according to any one of claims 1 to 16 to acquire the positioning coordinates of the line laser light emitted from the line laser transmitter in the current frame of image;
wherein the line laser light emitted from the line laser transmitter is within a field of view of the camera.

18. The robot according to claim 17, **characterized in that** a horizontal viewing angle of the camera is configured to receive the reflected light of the line laser light that is reflected from a space within a width of the robot in front of the robot; and/or
an installation height of the structured-light module on the body of the robot is configured to be in proportion to a height of an obstacle to be detected, so that the obstacle to be detected occupies an effective field of view of the camera.

19. The robot according to claim 18, **characterized in that** a coverage range of an upper viewing angle of the camera is configured to cover a bottom of a plane formed by the line laser light emitted from the line laser transmitter; a coverage range of a lower viewing angle of the camera is configured to cover the reflected light of the line laser light emitted from the line laser transmitter that is reflected from a surface of the obstacle in front of the body of the robot; and/or
a heading angle formed by a deflection of the camera relative to a central axis of the robot is maintained within a preset error angle range, so that an optical axis of the camera is parallel to a travel direction of the robot, and the camera receives the reflected light of the line laser light reflected back from the space within the width of the robot in front of the robot; and/or
a roll angle of the camera generated by rotating along an optical axis thereof is maintained within a preset error angle range, so that the camera receives the reflected light of the line laser light that is reflected back from the space within the width of the robot in front of the robot.

20. The robot according to claim 17, **characterized in that**, the larger an installation distance between the camera and the line laser module, the larger a coordinate offset of a pixel used to represent a reflection position of the line laser light on a surface of the obstacle relative to a center of the camera in the image captured by the camera.

21. The robot according to claim 17, **characterized in that** an emission angle of the line laser transmitter and a receiving angle of the camera are configured so that the line laser transmitter emits the line laser light to a preset detection position in front of the body, and the line laser light is reflected back to the camera from the preset detection position, wherein a length of a laser light segment formed by the line laser light at the preset detection position is greater than a width of the body of the robot;
whenever the robot travels a preset distance in a direction from a current position to the preset detection position, a horizontal distance between the preset detection position and the robot becomes smaller, and a coordinate offset of the pixel in the image captured by the camera that represents a same reflection position of the line laser light in the preset detection position relative to a center of the camera increases.
